(19) Europäisches Patentamt
European Patent Office
Office européen des brevets

(11) Veröffentlichungsnummer: **0 043 465**
**B1**

# (12) EUROPÄISCHE PATENTSCHRIFT

(45) Veröffentlichungstag der Patentschrift: **16.05.84**

(51) Int. Cl.³: **C 09 B 62/465,** D 06 P 3/66, D 06 P 3/10

(21) Anmeldenummer: **81104530.1**

(22) Anmeldetag: **12.06.81**

(54) **Reaktivfarbstoffe und ihre Verwendung zum Färben und Bedrucken hydroxylgruppenhaltiger oder stickstoffhaltiger Fasermaterialien.**

(30) Priorität: **25.06.80 DE 3023855**

(43) Veröffentlichungstag der Anmeldung: **13.01.82 Patentblatt 82/2**

(45) Bekanntmachung des Hinweises auf die Patenterteilung: **16.05.84 Patentblatt 84/20**

(84) Benannte Vertragsstaaten: **CH DE FR GB IT LI**

(56) Entgegenhaltungen:
**EP - A - 0 024 668**
**DE - A - 1 444 588**
**DE - A - 1 444 589**
**DE - A - 1 444 591**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Schallner, Otto, Dr., Jakob-Böhme-Strasse 11, D-5000 Köln 80 (DE)**
Erfinder: **Schündehütte, Karl Heinz, Dr., Klief 75, D-5090 Leverkusen 3 (DE)**

EP 0 043 465 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Reaktivfarbstoffe und ihre Verwendung zum Färben und Bedrucken hydroxylgruppenhaltiger oder stickstoffhaltiger Fasermaterialien

Gegenstand der vorliegenden Erfindung sind neue Reaktivfarbstoffe der Formel (I)

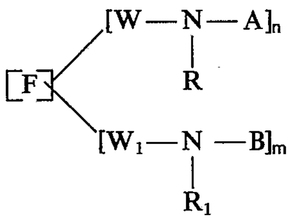

(I)

worin

F = Rest eines organischen Farbstoffs
W und $W_1$ = direkte Bindung oder Brückenglied
R und $R_1$ = Wasserstoff oder Alkyl
n und m = Zahl von 1 bis 4, vorzugsweise von 1 bis 2

A =

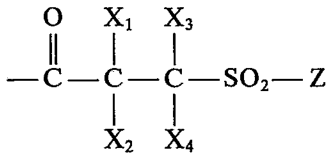

$X_1$–$X_4$ = Wasserstoff oder abspaltbarer Rest, wobei mindestens ein Rest $X_1$–$X_4$ für einen abspaltbaren Rest steht,
Z = gegebenenfalls substituiertes Phenyl,

B =

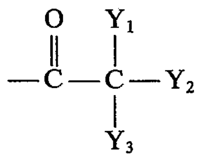

worin $Y_1$–$Y_3$ =
Wasserstoff oder abspaltbarer Rest, wobei mindestens ein Rest $Y_1$–$Y_3$ für einen abspaltbaren Rest steht und

wobei W und $W_1$ an ein C-Atom eines aromatisch-carbocylischen oder aromatisch-heterocyclischen Ringes des Chromophors gebunden sind.

Gegenstand der Erfindung ist weiterhin die Verwendung der Reaktivfarbstoffe der Formel (I) zum Färben und Bedrucken hydroxylgruppenhaltiger oder stickstoffhaltiger Fasermaterialien.

Als im Hinblick auf den Erfindungsgegenstand nächster Stand der Technik ist DE-A 1 444 591 aufzufassen. (Siehe dort insbesondere S. 8, erste Verbindung). Gegenüber diesem Stand der Technik weisen die erfindungsgemäßen Farbstoffe in überraschendem Maße überlegene färberische Eigenschaften auf.

Bevorzugte Reste A der Formel (I) sind folgende:

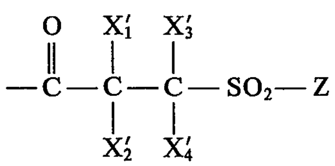

(1)

worin

$X'_1$ – $X'_4$ = Wasserstoff oder Halogen
wobei mindestens ein Rest $X'_1$ – $X'_4$ für Halogen steht,

und Z die oben angegebene Bedeutung besitzt

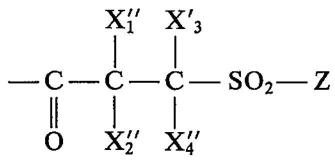

(2)

worin

$X_1''$ oder $X_3''$ = Halogen, das andere Wasserstoff,
$X_2''$ und $X_4''$ = Wasserstoff

und Z die oben angegebene Bedeutung besitzt

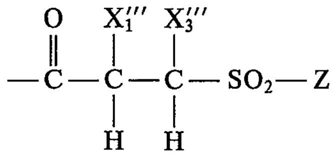

(3)

worin

$X_1'''$ = Cl oder Br
$X_3'''$ = Wasserstoff,

und Z die oben angegebene Bedeutung besitzt

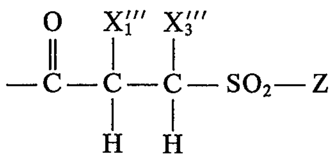

(4)

worin

$X_1'''$ = Wasserstoff
$X_3'''$ = Cl oder Br,

und Z die oben angegebene Bedeutung besitzt.

Für die im vorliegenden Anmeldungstext aufgeführten Alkyl-, Aryl-, Aralkyl- und Hetarylreste gilt:

Unter Alkylgruppen werden dabei insbesondere solche mit 1–4 C-Atomen verstanden, die gegebenenfalls Substituenten aufweisen können, beispielsweise Halogen wie Cl und Br, OH, CN.

Unter Arylruppen werden insbesondere Phenylreste verstanden, die gegebenenfalls Substituenten aufweisen, beispielsweise Halogen wie Cl und Br, $C_1$—$C_4$-Alkyl, $C_1$—$C_4$-Alkoxy, $C_1$—$C_4$-Alkylsulfonyl, $NO_2$, CN, $CF_3$, $SO_3H$, COOH.

Unter Aralkylresten werden insbesondere Benzylreste verstanden, die gegebenenfalls die für die Phenylreste genannten Substituenten aufweisen können.

Geeignete Hetarylreste sind beispielsweise Thiophenyl, Benzthiophenyl, Benzthiazolyl, Benzimidazolyl, Pyridyl, Pyrimidyl, Benzofuranyl, Indolyl, Chinolyl, Carbazyl, Chinoxalyl, Benztriazolyl.

Als abspaltbare Rest $X_1$ bis $X_4$ oder $Y_1$ bis $Y_4$ kommen vorzugsweise Halogenatome in Frage.

Bevorzugte Reste B sind folgende:

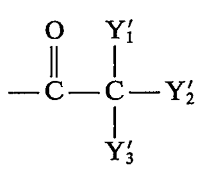

(1)

worin

$Y_1'$—$Y_3'$ = Wasserstoff, Chlor oder Brom, wobei mindestens ein Rest $Y_1'$—$Y_3'$ für Chlor oder Brom steht.

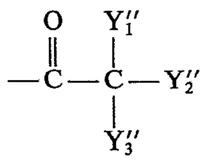

(2)

worin

$Y_1''$ = Wasserstoff
$Y_2''-Y_3''$ = Chlor oder Brom

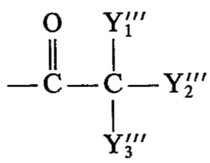

(3)

worin

$Y_1'''$ = Chlor oder Brom
$Y_2'''-Y_3'''$ = Wasserstoff.

W und $W_1$ stehen vorzugsweise für eine direkte Bindung an ein C-Atom eines aromatisch-carbocyclischen Ringes des Chromophors F.

Geeignete Brückenglieder W und $W_1$ sind beispielsweise:

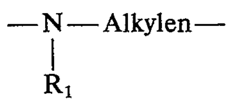

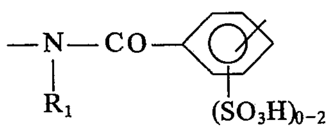

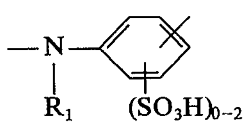

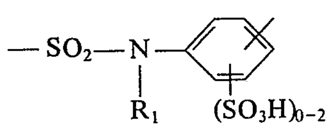

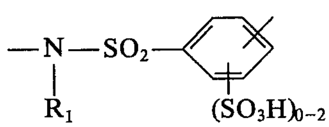

—O—Alkylen—

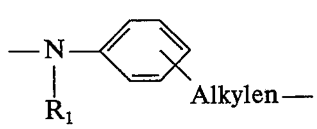

—S—Alkylen— —Alkylen— —Alkylen—CO— —Alkylen—$SO_2$—

wobei $R_1$ für Wasserstoff oder Alkyl, insbesondere $C_1$–$C_4$-Alkyl steht und Alkylen einen Alkylenrest mit 1–4 C-Atomen bedeutet.

Die neuen Farbstoffe können den verschiedensten Klassen angehören, z. B. der Reihe der metallfreien oder metallhaltigen Mono- oder Polyazofarbstoffe, metallfreien oder metallhaltigen Azaporphinfarbstoffe, wie Kupfer- oder Nickelphthalocyaninfarbstoffe, der Anthrachinon-, Oxazin-, Dioxazin-, Triphenylmethan-, Nitro-, Azomethin-, metallfreien oder metallhaltigen Formazanfarbstoffe.

Bevorzugte Farbstoffe sind solche mit 1 bis 6 Sulfogruppen.

Geeignete Farbstoffreste F bzw. den Farbstoffen (I) zugrunde liegende aminogruppenhaltige Farbstoffe sind in der Literatur in sehr großer Zahl beschrieben. Beispielhaft erwähnt seien hier:
Belgische Patentschrift: 606 947; 617 435; 567 435; 701 273; 683 734; 683 735; 689 573; 693 749; 708 003; 707 307;
Deutsche Auslegeschrift: 242 553; 1 212 655; 1 225 322;
Deutsche Offenlegungsschrift; 2 633 255; 2 103 299; 2 305 206; 2 418 283; 2 623 224; 1 809 388; 1 912 178; 2 057 867; 1 769 205; 2 107 427; 2 303 601; 2 600 490;
Schweizer Patentschrift: 536 353; 521 403;
Britische Patentschrift: 1 299 881; 1 300 742 sowie Venkataraman: The Chemistry of Synthetic

Dyes, Band VI, Kapitel II, Seite 211 bis 325, New York, London, 1972.

Im Rahmen dieser Farbstoffe sind folgende bevorzugt:

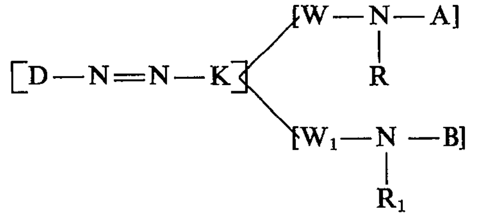

(II)

worin D und K aromatisch-carbocyclische oder -heterocyclische Reste darstellen, insbesondere D den Rest einer carbocyclischen Diazokomponente der Benzol- oder Naphthalinreihe, und K den Rest einer enolischen oder phenolischen Kupplungskomponente, z. B. eines 5-Pyrazolons, eines Pyridons, eines Aminopyridins, eines Acetessigsäurearylamids, eines Aminobenzols, eines Phenols, eines Hydroxynaphthalins, eines Aminonaphthalins oder eines Aminohydroxynaphthalins. D und K können im übrigen beliebige in Azofarbstoffen übliche Substituenten aufweisen, darunter auch weitere Azogruppen; R und $R_1$ stehen für eine niedere Alkylgruppe oder bevorzugt für ein Wasserstoffatom.

Besonders wertvolle Farbstoffe dieser Reihe sind solche, die wasserlöslich sind, und insbesondere solche, die Sulfonsäure- und/oder Carbonsäuregruppen aufweisen. Dabei besitzen aber auch sulfon- und carbonsäuregruppenfreie reaktive Dispersionsfarbstoffe der Azoreihe Interesse. Die Azofarbstoffe können sowohl metallfrei als auch metallhaltig sein, wobei unter den Metallkomplexen die Kupfer-, Chrom- und Kobaltkomplexe bevorzugtes Interesse haben.

Wichtige Azofarbstoffe sind beispielsweise solche der Benzol-azo-naphthalinreihe, der Benzol-azo-1-phenyl-5-pyrazolonreihe, der Benzol-azo-benzolreihe, der Naphthalin-azo-benzolreihe, der Benzol-azo-aminonaphthalinreihe, der Naphthalin-azo-naphthalinreihe, der Naphthalin-azo-1-phenylpyrazolon-5-Reihe, der Benzol-azo-pyridonreihe, der Benzol-azo-aminopyridin-reihe, der Naphthalin-azo-pyridonreihe, der Naphthalin-azo-aminopyridinreihe, und der Stilben-azo-benzolreihe, wobei auch hier die sulfonsäuregruppenhaltigen Farbstoffe bevorzugt sind. Im Falle von Metallkomplexazofarbstoffen befinden sich die metallkomplexgebundenen Gruppen vorzugsweise in den o-Stellungen zur Azogruppen, z. B. in Form von o,o'-Dihydroxy-, o-Hydroxy-o'-carboxy-, o-Carboxy-o'-amino- und o-Hydroxy-o'-amino-azogruppierungen.

Besonders hervorragende Typen werden durch die folgenden Formeln veranschaulicht:

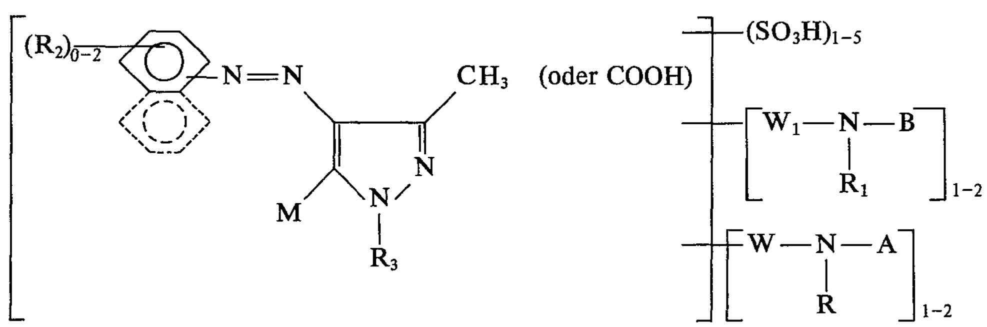

(III)

M = OH, $NH_2$, $NR_3R_4$, $OR_3$

$R_2$ = Alkyl, Alkoxy, Halogen, insbesondere Cl,

$R_3$ und $R_4$ = Wasserstoff, Alkyl, Aryl, Hetaryl oder Aralkyl.

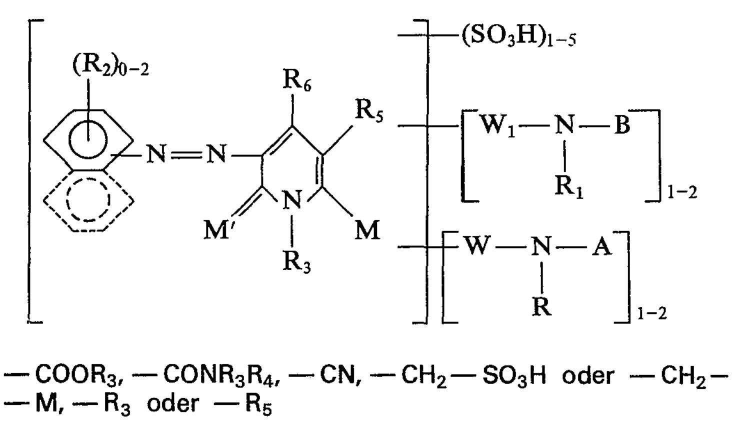

(IV)

$R_5$ = $-COOR_3$, $-CONR_3R_4$, $-CN$, $-CH_2-SO_3H$ oder $-CH_2-NR_3R_4$

$R_6$ = $-M$, $-R_3$ oder $-R_5$

M' = O, $NR_3$

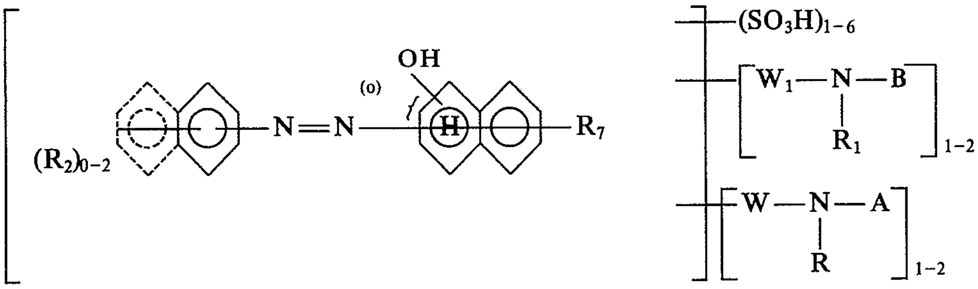

(V)

$R_7$ = Wasserstoff, $—NR_3—CO—R_8$, $—NR_3—SO_2—R_8$
$R_8$ = Alkyl, Aryl, Hetaryl und Aralkyl
o = ortho-ständige Stellung der jeweiligen Reste

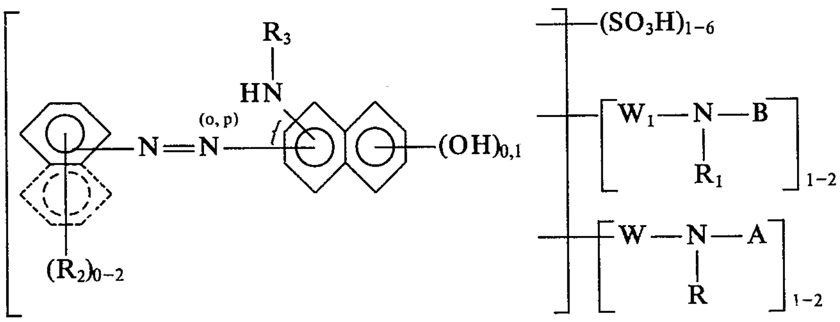

(VI)

(o, p) = ortho- oder paraständige Stellung der jeweiligen Reste

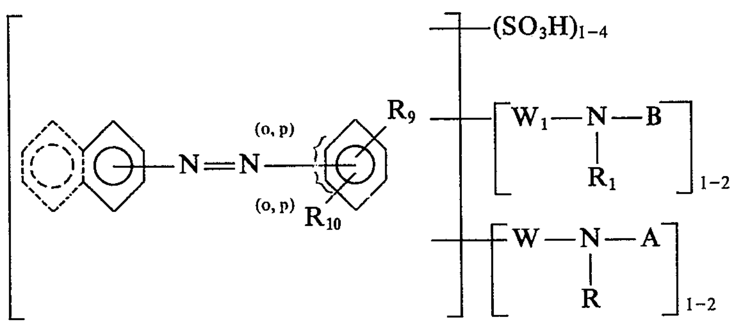

(VII)

$R_9$ und $R_{10}$ = Wasserstoff, $R_8$, $—OR_3$, Halogen, $—NR_3R_4$, $—COOR_3$, $—NR_3—CO—R_4$, $—O—CO—R_4$, $—NR_3—SO_2—R_4$, $—O—SO_2—R_4$, $—NR_3—CO—NR_3R_4$

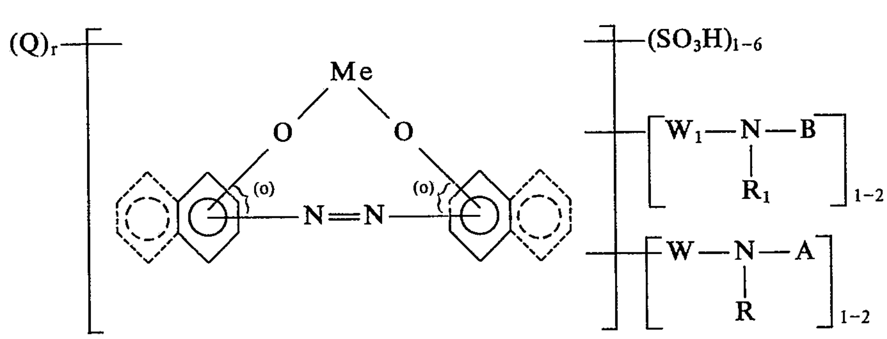

(VIII)

Me = Cu, Cr
Q = Alkyl, Alkoxy, Halogen, $—NO_2$, Acylamino wie $CH_3—CO—NR_3—$, $—COOR_3$, $—CONR_3R_4$, $—SO_2—NR_3R_4$
r = 0–4

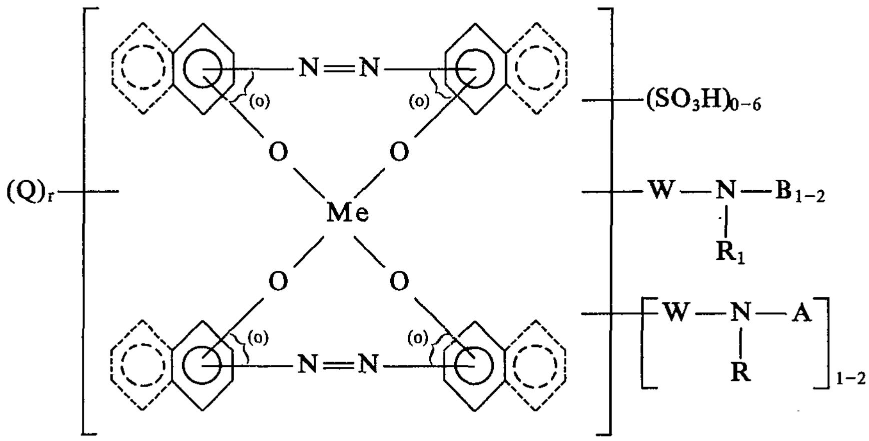

(IX)

Me = Co, Cr
r = 0–8

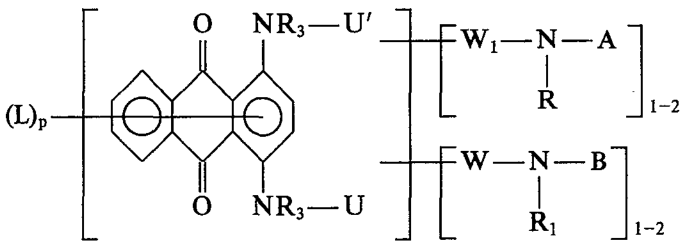

(X)

p = 0–4,
L = Substituent, wie Sulfo oder Carboxy,
U = gegebenenfalls durch O oder S unterbrochener, aliphatischer, cycloaliphatischer, araliphatischer oder aromatischer Rest
U' = Wasserstoff oder U

W und $W_1$ stehen vorzugsweise für $C_1$—$C_2$-Alkylen oder eine direkte Bindung, Alkylen bedeutet vorzugsweise $C_1$—$C_4$-Alkylen und Cycloalkylen steht vorzugsweise für gegebenenfalls substituiertes Cyclohexylen.

Darüber hinaus besitzen auch noch sulfonsäure- und carbonsäuregruppenfreie reaktive Dispersionsfarbstoffe der Anthrachinonreihe Interesse.

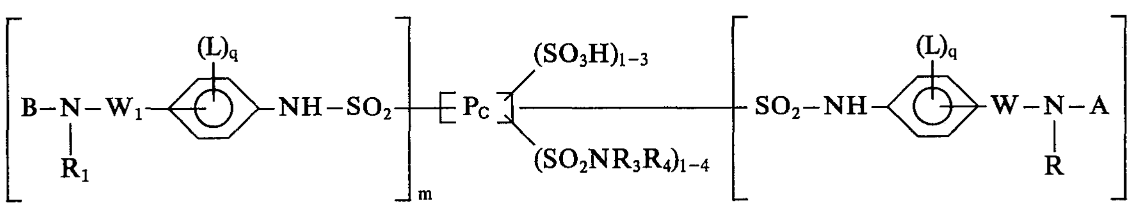

(XI)

L = Substituent, insbesondere Sulfo oder Carboxy
q = 0–4.

W und $W_1$ stehen vorzugsweise für eine direkte Bindung oder $C_1$—$C_2$-Alkylen. Der Phthalocyaninrest Pc trägt bevorzugt als weitere Substituenten 1—3 Sulfonsäure- und/oder 1—2 Sulfonsäureamidgruppe, wie $-SO_2NH_2-$, $-SO_2NH$-alkyl–, $-SO_2N(alkyl)_2-$ und $-SO_2NH$-(aryl)-Gruppen.

R und $R_1$ stehen vorzugsweise für Wasserstoff. Soweit nicht anders angegeben, haben die Alkyl-, Aryl-, Hetaryl- und Aralkylreste die oben angegebene Bedeutung.

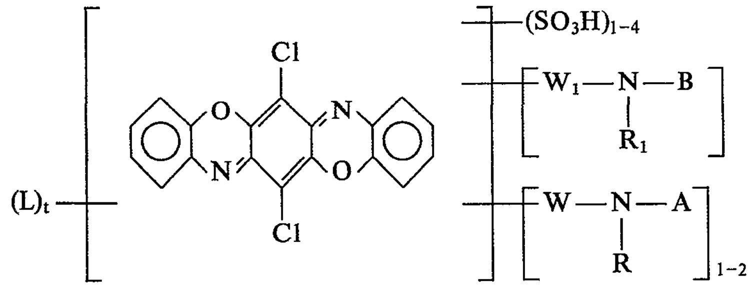

(XII)

L = Substituent, insbesondere Halogen, $C_{1-4}$-Alkyl, $C_{1-4}$-Alkoxy oder Carboxy
t = 0 bis 3

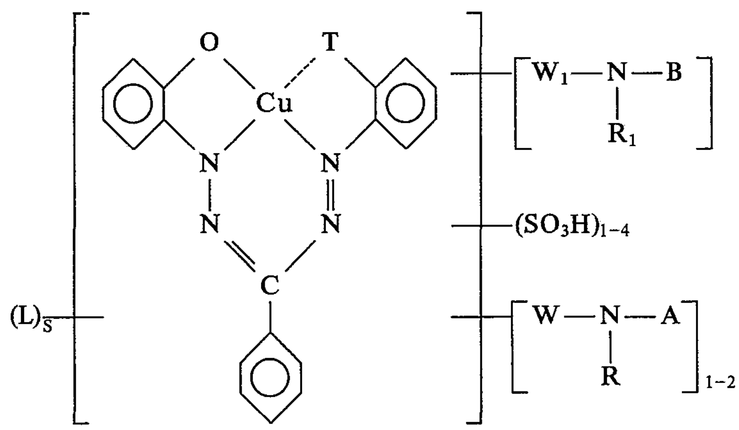

(XIII)

L = Substituent, insbesondere Halogen, $C_{1-4}$-Alkyl, $C_{1-4}$-Alkoxy, Alkylsulfonyl, Aminosulfonyl, unkondensierte Phenylreste oder Carboxy
S = 0–6
T = zur Komplexbildung befähigte Gruppe, —OH, —COOH oder —$SO_3H$

Die neuen Farbstoffe können im übrigen beliebige in Farbstoffen übliche Substituenten aufweisen, wie Sulfonsäure-, Carbonsäure-, Sulfonamid- und Carbonamidgruppen, die am Amidstickstoffatom weiter substituiert sein können, Sulfonsäureester- und Carbonsäureestergruppen, Alkyl-, Aralkyl- und Arylreste, Alkylamino-, Aralkylamino-, Arylamino-, Acylamino-, Nitro-, Cyan-, Halogen-, wie Cl, Br und F, Hydroxy-, Alkoxy-, Thioether-, Azogruppierungen und dergleichen.

Die Herstellung der neuen Farbstoffe (I) kann nach verschiedenen Verfahren erfolgen, beispielsweise durch Umsetzung von Farbstoffen der Formel:

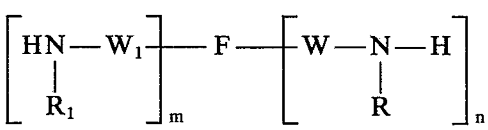

(XIV)

oder von Farbstoffvorprodukten mit der Gruppierung

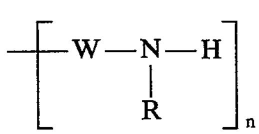 und 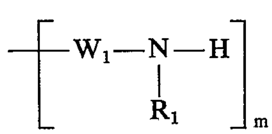

mit reaktiven Carbonsäurederivaten der Formeln

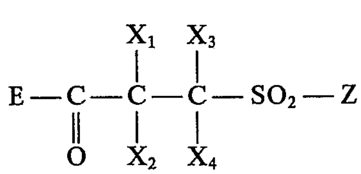

(XV)

und

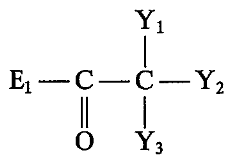
(XVI)

E und $E_1$ = Abgangsgruppen, vorzugsweise Halogen,

wobei im Falle der Verwendung von Farbstoffvorprodukten diese in geeigneter Weise in die gewünschten Endfarbstoffe umgewandelt werden.

Die Umsetzung der Farbstoffe (XIV) bzw. der Farbstoffvorprodukte mit einer Gruppe

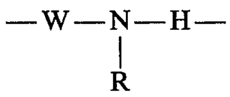 bzw. 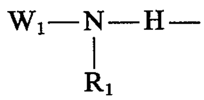

mit den reaktiven Derivaten der Verbindungen (XV) und (XVI) wird je nach der Art der Ausgangsverbindungen in organischen, organisch-wäßrigem oder wäßrigem Medium bei Temperaturen von etwa −10°C bis +100°C, vorzugsweise 0°C bis 50°C und vorzugsweise in Gegenwart von Säureakzeptoren wie Alkalicarbonat oder Alkalihydroxid durchgeführt.

Geeignete reaktive Derivate sind insbesondere die Anhydride oder Säurehalogenide, insbesondere die Säurechloride, Säurefluoride und Säurebromide.

Die reaktiven Derivate (XV) erhält man beispielsweise aus den Säuren in bekannter Weise, so durch Umsetzung mit organischen und anorganischen Säurehalogeniden, z. B. $SOCl_2$, $POCl_3$, $PBr_3$, $SbF_5$, $COCl_2$, Benzoylchlorid oder Trifluortriazin.

Die Derivate der Formel XVI sind größtenteils bekannt.

Ein weiteres Verfahren zur Herstellung von (I) besteht darin, daß man Farbstoffe der Formel

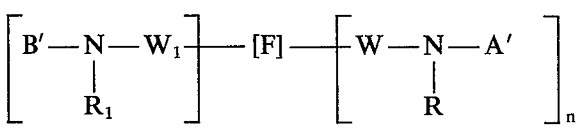

oder Farbstoffvorprodukte mit den Gruppierungen

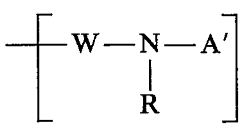 und 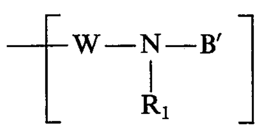

worin

A′ = 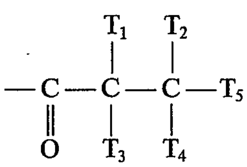

und

B′ = 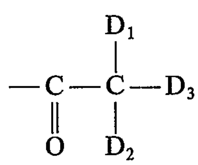

und worin

$T_1$–$T_4$ = Wasserstoff oder abspaltbarer Rest, wobei mindestens ein Rest $T_1$–$T_4$ für einen abspaltbaren Rest steht und
$T_5$ = abspaltbarer Rest

und worin

$D_1$–$D_3$ = Wasserstoff oder abspaltbarer Rest, wobei mindestens ein Rest $D_1$–$D_3$ für einen abspaltbaren Rest steht

mit einer Verbindung der Formel $HSO_2-Z$ umsetzt, und anschließend, falls erforderlich, in die Endfarbstoffe umwandelt.

Dabei werden die Reste $T_5$ und $D_3$ gegen den Rest $-SO_2-Z$ ausgetauscht.

Bei Verwendung von Farbstoff-Zwischenprodukten werden die erhaltenen Kondensationsprodukte in an sich üblicher Weise in die gewünschten Endfarbstoffe umgewandelt. Dieses Verfahren hat bevorzugtes Interesse für die Darstellung von Azofarbstoffen, indem man beispielsweise eine Diazo- und/oder Kupplungskomponente, die eine reaktionsfähige Amino- oder Amidgruppe aufweist, zunächst mit der Reaktivkomponente kondensiert und das erhaltene Zwischenprodukt anschließend durch Diazotieren und/oder Kuppeln und/oder Kondensieren in eine Azofarbstoff umwandelt. In diesem können nachträglich weitere Umwandlungsreaktionen vorgenommen werden, wie sie in Azofarbstoffen üblich sind, z. B. Acylierungs-, Kondensations-, Reduktions-, Metallisierungs- oder Sulfierungsreaktionen.

Auch bei der Darstellung anderer Farbstoffe, insbesondere solcher der Phthalocyanin- und Anthrachinonreihe können nach der Reaktion des Farbstoffs mit reaktiven Derivaten (XV) und (XVI) weitere Umwandlungsreaktionen vorgenommen werden, z. B. Acylierungs-, Kondensations- und Sulfierungsreaktionen. Darüber hinaus kann die Kondensation der reaktiven Derivate (XV) und (XVI) zunächst mit einem Zwischenprodukt erfolgen, z. B. mit m-Phenylendiamin oder einer m-Phenylendiaminsulfonsäure, und das erhaltene Reaktionsprodukt anschließend mit einem Anthrachinonsulfonsäurehalogenid oder mit einem Kupfer- oder Nickelphthalocyaninsulfonsäurehalogenid zu einem reaktiven Phthalocyanin- oder Anthrachinonfarbstoff weiter umgesetzt werden.

Die neuen Farbstoffe sind äußerst wertvolle Produkte, die sich für verschiedenste Anwendungszwecke eignen. Sie finden bevorzugtes Interesse für das Färben hydroxylgruppenhaltiger und stickstoffhaltiger Materialien, insbesondere von Textilmaterialien aus nativer und regenerierter Cellulose, ferner aus Wolle, Seide, synthetischen Polyamid- und Polyurethanfasern sowie zum Färben von Papier. Die sulfonsäuregruppenfreien Farbstoffe sind insbesondere zum Färben von Polyestermaterialien, insbesondere Textilmaterialien aus Polyethylenglykolterephthalat geeignet.

## Beispiel 1

In eine Lösung von 0.1 mol des Dinatriumsalzes der 1,5-Diaminobenzol-2,4-disulfonsäure in 300 ml Wasser werden bei 0—5° C unter gutem Rühren 14 g Chloracetylchlorid eingetropft. Unter Abstumpfen der freiwerdenden Salzsäure auf pH 5—6 mit 10%iger Sodalösung wird so lange gerührt bis dünnschichtchromatographisch keine Ausgangsverbindung mehr nachzuweisen ist. Nach Zugabe von Eis wird das entstandene Zwischenprodukt mit 28 ml Salzsäure und 7 g Natriumnitrit diazotiert. Zur Kupplung suspendiert man 19 g (0.1 Mol) 1-(3'-Aminophenyl)-3-methyl-pyrazolon-(5) in 140 ml Wasser und gibt diese Suspension zur Diazoniumsalz-Lösung. Mit festem Natriumacetat-Trihydrat wird ein pH-Wert von 4 eingestellt. Dabei entsteht eine hellbraune Lösung. Der Farbstoff wird aus dieser Lösung mit Kaliumchlorid ausgefällt und abgesaugt, der feuchte Filterkuchen in 250 ml Wasser suspendiert und bei 0—5° C unter gutem Rühren mit 32 g 3-Chlor-3-phenylsulfonylpropionylchlorid gelöst in 75 ml Aceton versetzt. Man rührt bis zur vollständigen Umsetzung und hält während dieser Zeit den pH-Wert der Lösung mit 10%iger Sodalösung bei 5—6. Der Farbstoff wird mit Kaliumchlorid ausgefällt, abgesaugt und im Vakuum bei 50—60° getrocknet.

Man erhält einen Farbstoff der Formel

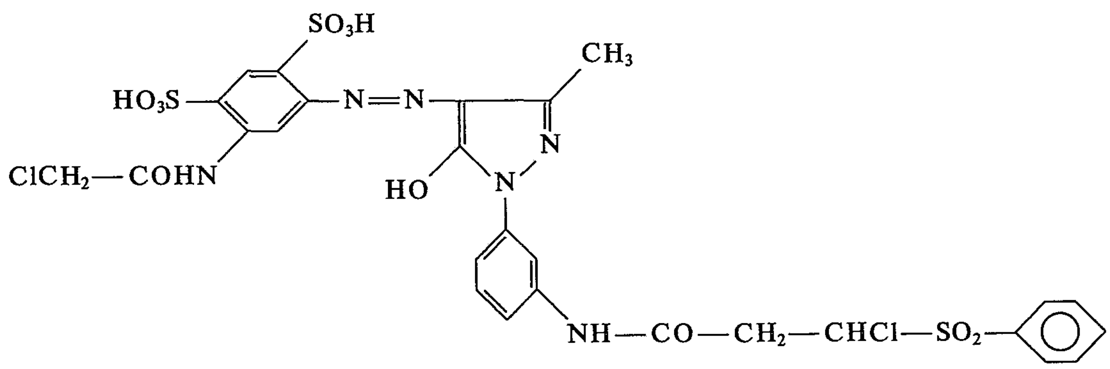

der sich in Wasser mit gelber Farbe löst und auf Wolle und Baumwolle gelbe Färbung liefert.

Verwendet man anstelle von 3-Chlor-3-phenylsulfonylpropionylchlorid 2-Chlor-3-phenylsulfonylpropionylchlorid oder 37 g 2-Brom-3-phenylsulfonylpropionylchlorid bzw. 3-Brom-3-phenylsulfonylpropionylchlorid zur Acylierung, so erhält man Farbstoffe, die Wolle und Baumwolle ebenfalls in echten gelben Tönen färben.

Weitere gelbe Farbstoffe mit ähnlichen Eigenschaften erhält man, wenn man die in der folgenden Tabelle in Spalte 1 genannten Diazokomponenten mit der in Spalte 2 genannten Kupplungskomponente umsetzt und die erhaltenen Farbstoffe mit den in Spalte 3 genannten Kupplungskomponenten acyliert.

| Beispiel | Diazokomponente<br>1 | Kupplungskomponente<br>2 | Acylierungsmittel<br>3 |
|---|---|---|---|
| 2 | 1-Amino-5-chloracetylaminobenzol-2,4-disulfonsäure | 1-(2′-Methyl-3′-amino-5′-sulfophenyl)-3-carboxypyrazolon-(5) | 3-Chlor-3-phenylsulfonylpropionylchlorid |
| 3 | desgl. | 1-(2′-Methyl-3′-amino-5′-sulfophenyl)-3-methylpyrazolon-(5) | desgl. |
| 4 | desgl. | 1-(3′-Aminophenyl)-5-pyrazolon-3-carbonsäure | desgl. |
| 5 | 1-Amino-5-bromacetylaminobenzol-2,4-disulfonsäure | 1-(3′-Aminophenyl)-3-methyl-5-pyrazolon | 2-Chlor-3-phenyl-sulfonylpropionylchlorid |
| 6 | 1-Amino-5-dichloracetylaminobenzol-2,4-disulfonsäure | desgl. | desgl. |
| 7 | 1-Amino-5-(3′-chlor-3′-phenylsulfonylpropionylamino)-benzol-2,4-disulfonsäure | desgl. | Chloracetylchlorid |
| 8 | 1-Amino-4-chloracetylaminobenzol-2,5-disulfonsäure | desgl. | 3-Chlor-3-phenylsulfonylpropionylchlorid |
| 9 | 1-Amino-4-chloractylaminobenzol-2,6-disulfonsäure | desgl. | desgl. |
| 10 | 1-Amino-5-chloracetylaminonaphthalin-3,7-disulfonsäure | desgl. | 2-Brom-3-phenylsulfonylpropionylchlorid |
| 11 | 1-Amino-5-chloracetylaminobenzol-2-sulfonsäure | 1-(2′-Methyl-3′-amino-5′-sulfophenyl)-3-carboxypyrazolon-(5) | 3-Chlor-3-phenylsulfonylpropionylchlorid |
| 12 | desgl. | 1-(2′-Methyl-3′-amino-5′-sulfophenyl)-3-methylpyrazolon-(5) | desgl. |
| 13 | desgl. | 1-(3′-Aminophenyl)-3-methyl-5-pyrazolon | desgl. |
| 14 | desgl. | 1-(3′-Aminophenyl)-5-pyrazolon-3-carbonsäure | desgl. |
| 15 | 1-Amino-5-(2′-chlor-3′-phenylsulfonylpropionylamino)-benzol-2-sulfonsäure | 1-(2′-Methyl-3′-amino-5′-sulfophenyl)-3-carboxypyrazolon-(5) | Chloracetylchlorid |
| 16 | desgl. | 1-(2′-Methyl-3′-amino-5′-sulfophenyl)-3-methylpyrazolon-(5) | desgl. |

Fortsetzung

| Beispiel | Diazokomponente 1 | Kupplungskomponente 2 | Acylierungsmittel 3 |
|---|---|---|---|
| 17 | 1-Amino-5-(2'-chlor-3'-phenylsulfonylpropionyl-amino)-benzol-2-sulfonsäure | 1-(3'-Aminophenyl)-5-pyrazolon-3-carbonsäure | Bromacetylchlorid |
| 18 | 1-Amino-5[3'-(3"-chlor-3"-phenylsulfonylpropionyl-amino)benzoylamino]-benzol-2-sulfonsäure | 1-(2'-Methyl-3'-amino-5'-sulfophenyl)-3-carboxy-pyrazolon-(5) | Chloracetylchlorid |
| 19 | 1-Amino-5-(2',2'-dichlor-3'-phenylsulfonylpropionyl-amino)benzol-2-sulfonsäure | desgl. | desgl. |

Beispiel 20

Man löst 0,1 Mol des Diaminoazofarbstoffs der Formel

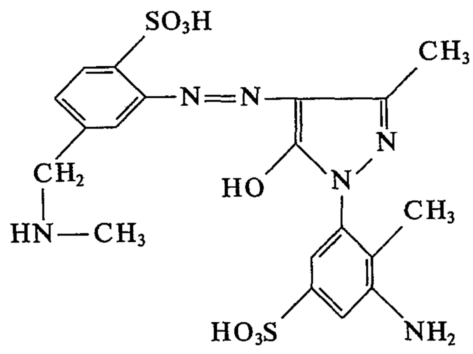

der durch Kuppeln von diazotiertem 3-Amino-4-sulfobenzyl-N-methylamin mit 1-(2'-Methyl-3'-amino-5'-sulfophenyl)-3-methylpyrazolon-(5) erhalten wurde, in 2000 ml Wasser.

In diese Lösung tropft man innerhalb einer Stunde bei 0—5° C 29 g 3-Chlor-3-phenylsulfonylpropionylchlorid in 70 ml Aceton, wobei die freiwerdende Salzsäure mit 10%iger Sodalösung ständig auf pH 5—6 abgestumpft wird.

Man rührt ca. 2 Stunden nach, stellt den pH-Wert auf 7.5-8 und gibt nochmals 14 g Chloracetylchlorid tropfenweise zu und hält den pH-Wert mit Sodalösung bei 7.5-8. Nach beendeter Umsetzung wird der Farbstoff isoliert und im Vakuum bei 50—60° C getrocknet. Er löst sich in Wasser mit gelber Farbe und liefert naß- und lichtechte Färbungen auf Wolle und Baumwolle.

Ähnliche Reaktivfarbstoffe erhält man, wenn man statt des oben genannten Diaminoazofarbstoffes einen aus den in der nachfolgenden Tabelle aufgeführten Komponenten (Spalte 1 und 2) aufgebauten Diaminoazofarbstoff mit den in Spalte 3 aufgeführten Säurechloriden acyliert.

| Beispiel | Diazokomponente 1 | Kupplungskomponente 2 | Acylierungsmittel 3 | Farbton |
|---|---|---|---|---|
| 21 | 3-Amino-4-sulfobenzyl-N-methylamin | 1-(2'-Methyl-3'-amino-5'-sulfophenyl)-3-carboxy-pyrazolon-5 | 3-Chlor-3-phenylsulfonylpropionylchlorid/Chloracetylchlorid | gelb |
| 22 | desgl. | 1-(3'-Aminophenyl)-3-methyl-5-pyrazolon | desgl. | gelb |
| 23 | desgl. | 1-(3'-Aminophenyl)-5-pyrazolon-3-carbonsäure | desgl. | gelb |
| 24 | desgl. | 1-(2'-Methyl-3'-amino-5'-sulfophenyl)-3-methylpyrazolon-(5) | 2-Chlor-3-phenylsulfonylpropionylchlorid/Bromacetylchlorid | gelb |
| 25 | 5-Amino-2-methoxy-4-sulfobenzylamin | desgl. | 2-Brom-3-phenylsulfonylpropionylchlorid/Dichloracetylchlorid | gelb |
| 26 | 2-Amino-5-aminomethylen-naphthalin-1-sulfonsäure | desgl. | desgl. | gelb |

Beispiel 27

0,1 Mol Natrium-1,3-diaminobenzol-4-sulfonat werden in 300 ml Wasser gelöst und bei 0—5° C unter gutem Rühren mit 29,4 g 3-Chlor-3-phenylsulfonylpropionylchlorid, gelöst in 80 ml Aceton, versetzt. Durch Zutropfen von 10%iger Sodalösung wird ein pH-Wert von 6—7 gehalten.

Nach beendeter Reaktion wird die klare Lösung in eine Mischung von ca. 150 g Eis, 70 ml konz. Salzsäure und 15 g Kaliumchlorid gegeben, filtriert und mit ges. Kaliumchloridlösung gewaschen. Die feuchte Paste wird in 400 ml Wasser suspendiert und mit 7 g Natriumnitrit und 28 ml konz. Salzsäure diazotiert. Nach beendeter Reaktion wird der Nitritüberschuß mit Amidosulfonsäure zerstört. In diese Suspension der Diazokomponente gibt man eine gekühlte Lösung von 1-(2'-Aminoethyl)-4-methyl-6-oxy-2-pyridon-3-carbonamid in 500 ml Wasser. Es entsteht dabei der folgende Farbstoff:

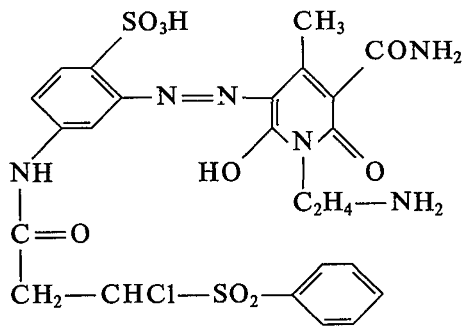

Die entstehende Lösung wird mit Sodalösung auf pH 7.5—8.5 gestellt und mit 14 g Chloracetylchlorid versetzt. Die entstehende Säure wird mit Sodalösung abgestumpft. Nach beendeter Reaktion wird der Farbstoff isoliert und im Vakuum bei 50—60° C getrocknet.

Er färbt natürliche und künstliche Polyamidfasern und Cellulosefasern in reinen grünstichig gelben Nuancen.

Verwendet man anstelle von 1-Amino-5-(3'-chlor-3'-phenylsulfonylpropionylamino)-benzol-2-sulfonsäure die äquivalente Menge 1-Amino-5-(3'-brom-3'-phenylsulfonylpropionylamino)-benzol-2-sulfonsäure oder 1-Amino-5-(2'-chlor-3'-phenylsulfonylpropionylamino)-benzol-2-sulfonsäure bzw. 1-Amino-5-(2'-3'-phenylsulfonylpropionyl-amino)-benzol-2-sulfonsäure, so erhält man Farbstoffe mit

ganz ähnlichen Eigenschaften.

Weitere gelbe Farbstoffe mit ähnlichen Eigenschaften erhält man, wenn man die in der folgenden Tabelle in Spalte 1 genannten Diazokomponenten mit den in Spalte 3 genannten Reaktivkomponenten acyliert, danach mit den in Spalte 2 genannten Kupplungskomponenten umsetzt und die entstandenen Farbstoffe mit den in Spalte 4 genannten Säurechloriden acyliert.

| Beispiel | Diazokomponente | Kupplungskomponente | Reaktivkomponente | |
|---|---|---|---|---|
| | 1 | 2 | 3 | 4 |
| 28 | 1,5-Diaminobenzol-2-sulfonsäure | 1-(2'-Aminoethyl)-4-methyl-6-oxy-2-pyridon-3-carbonamid | Chloracetylchlorid | 3-Chlor-3-phenylsulfonylpropionylchlorid |
| 29 | 1,5-Diamino-4-methylbenzol-3-sulfonsäure | desgl. | 2-Chlor-3-phenylsulfonylpropionylchlorid | Chloracetylchlorid |
| 30 | 1,4-Diaminobenzol-2-sulfonsäure | desgl. | desgl. | desgl. |
| 31 | 1-Amino-5-(4'-aminobenzoylamino)-benzol-2-sulfonsäure | desgl. | 3-Chlor-3-phenylsulfonylpropionylchlorid | desgl. |
| 32 | 1-Amino-5-(3'-amino-benzoylamino)-benzol-2-sulfonsäure | desgl. | desgl. | Bromacetylchlorid |
| 33 | 1-Amino-4-(4'-aminobenzoylamino)-benzol-2-sulfonsäure | desgl. | desgl. | desgl. |
| 34 | 1-Amino-4-(3'-aminobenzoylamino)benzol-2-sulfonsäure | desgl. | desgl. | Dichloracetylchlorid |
| 35 | 1-Amino-2-methyl-3-(3'-aminobenzoylamino)benzol-5-sulfonsäure | desgl. | desgl. | Chloracetylchlorid |
| 36 | 1-Amino-2-methyl-3-(3'-aminobenzoylamino)benzol-2-sulfonsäure | desgl. | desgl. | desgl. |
| 37 | 1,5-Diaminobenzol-2,4-disulfonsäure | desgl. | desgl. | desgl. |
| 38 | 1,5-Diaminobenzol-2-sulfonsäure | 1-(2'-Aminomethyl)-3-cyano-4-methyl-6-hydroxypyridon-(2) | 3-Chlor-3-phenylsulfonylpropionylchlorid | Chloracetylchlorid |
| 39 | 1-Amino-5-(4'-aminobenzoylamino)-benzol-2-sulfonsäure | desgl. | desgl. | desgl. |

Fortsetzung

| Beispiel | Diazokomponente<br>1 | Kupplungskomponente<br>2 | Reaktivkomponente<br>3 | <br>4 |
|---|---|---|---|---|
| 40 | 1-Amino-5-(3′-aminobenzoylamino)-benzol-2-sulfonsäure | 1-(2′-Aminomethyl)-3-cyano-4-methyl-6-hydroxypyridon-(2) | 3-Chlor-3-phenylsulfonylpropionylchlorid | Chloracetylchlorid |
| 41 | 1,4-Diaminobenzol-2-sulfonsäure | desgl. | desgl. | desgl. |
| 42 | 1-Amino-4-(4′-aminobenzoylamino)-benzol-2-sulfonsäure | desgl. | desgl. | desgl. |
| 43 | 1-Amino-4-(3′-aminobenzoylamino)-benzol-2-sulfonsäure | desgl. | desgl. | desgl. |
| 44 | 1,5-Diaminobenzol-2,4-disulfonsäure | desgl. | desgl. | desgl. |
| 45 | desgl. | 3-Aminomethyl-1-ethyl-4-methyl-6-hydroxypyridon-(2) | desgl. | desgl. |

Beispiel 46

0,1 Mol 1-(4′-Aminobenzoylamino)-8-hydroxy-naphthalin-3,6-disulfonsäure werden in 600 Teilen Wasser mit Sodalösung bei pH 4,5 gelöst. In diese Lösung tropft man innerhalb einer Stunde bei 0—5° C 29,4 g 3-Chlor-3-phenyl-sulfonylpropionylchlorid in 80 ml Aceton ein, wobei die freiwerdende Salzsäure mit Sodalösung ständig auf pH 3,5—4 abgestumpft wird. Das acylierte Farbstoffzwischenprodukt wird mit Kaliumchlorid abgeschieden und isoliert. Die so erhaltene Paste wird in 700 Teilen Wasser angeschlagen und bei einem pH von 6—7 bei 0—5° C mit 0.1 Mol diazotierter 1-Amino-5-chloracetylaminobenzol-2-sulfonsäure gekuppelt.

Die Diazokomponente wird folgendermaßen hergestellt:

In eine Lösung von 0.1 Mol des Natriumsalzes der 1,5-Diaminobenzol-2-sulfonsäure in 300 ml Wasser, werden bei 0—5° C unter gutem Rühren 14 g Chloracetylchlorid in 100 ml Methylenchlorid eingetropft. Unter Abstumpfen der freiwerdenden Salzsäure auf pH 5—6 mit 10%iger Sodalösung wird so lange gerührt, bis dünnschichtchromatographisch keine Ausgangsverbindung mehr nachweisbar ist. Das organische Lösungsmittel wird abgetrennt und die Lösung nach Zugabe von 28 ml Salzsäure mit 7 g Natriumnitrit versetzt. Man erhält einen Farbstoff der Formel

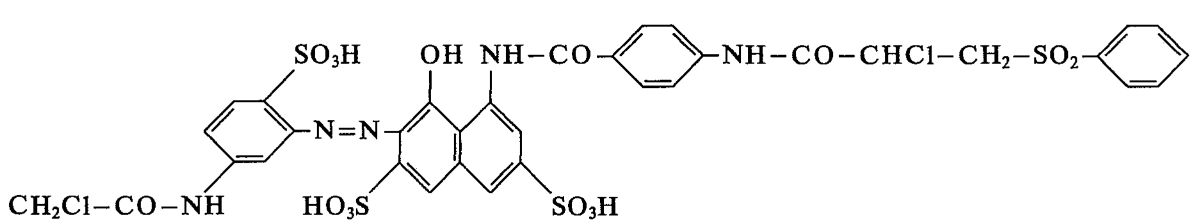

der ausgesalzen, isoliert und bei 50—60° C im Vakuum getrocknet wird. Der Farbstoff löst sich in Wasser und färbt Wolle und Baumwolle in echten roten Tönen.

Verwendet man anstelle von 1-Amino-5-(chloracetylamino)-benzol-2-sulfonsäure, 1-Amino-4-(chloracetylamino)-benzol-2-sulfonsäure, so erhält man einen Farbstoff, der Wolle und Baumwolle in echten blaustichig roten Tönen färbt.

Nach dem gleichen Verfahren liefern auch die in Spalte 2 der folgenden Tabelle aufgeführten Kupplungskomponenten und die in Spalte 1 aufgeführten Diazokomponenten Farbstoffe, die Wolle und Baumwolle in echten Tönen färben.

Statt der in der Tabelle erwähnten 3-Chlor-3-phenyl-sulfonylpropionylderivate können auch die entsprechenden 2-Chlor-3-phenylsulfonylpropionyl-, 3-Brom-3-phenyl-sulfonylpropionyl- und 2-Brom-3-phenyl-sulfonylpropionylderivate eingesetzt werden, statt der erwähnten Chloracetylderivate auch die entsprechenden Bromacetyl- oder Dichloracetylderivate.

| Beispiel | Diazokomponente<br>1 | Kupplungskomponente<br>2 | Farbton<br>3 |
|---|---|---|---|
| 47 | 1-Amino-5-chloracetylaminobenzol-2-sulfonsäure | 1-[3′-(3″-chlor-3″-phenylsulfonylpropionylamino)-benzoylamino]-8-hydroxynaphthalin-3,6-disulfonsäure | rot |
| 48 | desgl. | 1-[4′-(3″-chlor-3″-phenylsulfonylpropionylamino)-benzoylamino]-8-hydroxynaphthalin-4,6-disulfonsäure | rot |
| 49 | desgl. | 1-[3′-(3″-chlor-3″-phenylsulfonylpropionylamino)-benzoylamino]-8-hydroxynaphthalin-4,6-disulfonsäure | rot |
| 50 | desgl. | 2-(3′-chlor-3′-phenylsulfonylpropionyl-N-methylamino)-5-hydroxynaphthalin-7-sulfonsäure | orange |
| 51 | desgl. | 2-(3′-chlor-3′-phenylsulfonylpropionylamino)-5-hydroxynaphthalin-7-sulfonsäure | orange |
| 52 | desgl. | 2-(3′-chlor-3′-phenylsulfonylpropionylamino)-8-hydroxynaphthalin-6-sulfonsäure | scharlach |
| 53 | desgl. | 2-(3′-chlor-3′-phenylsulfonylpropionyl-N-methylamino)-8-hydroxynaphthalin-6-sulfonsäure | scharlach |
| 54 | desgl. | 2-[4′-(3″-chlor-3″-phenylsulfonylpropionylamino)-benzoylamino]-5-hydroxynaphthalin-7-sulfonsäure | orange |
| 55 | desgl. | 2-[3′-(3″-chlor-3″-phenylsulfonylpropionylamino)-benzoylamino]-5-hydroxynaphthalin-7-sulfonsäure | orange |
| 56 | desgl. | 2-(3′-chlor-3′-phenylsulfonylpropionylamino)-5-hydroxynaphthalin-1,7-disulfonsäure | orange |
| 57 | desgl. | 2-(3′-chlor-3′-phenylsulfonylpropionylamino)-8-hydroxynapthalin-3,6-disulfonsäure | scharlach |
| 58 | desgl. | 1-(3′-chlor-3′-phenylsulfonylpropionylamino)-8-hydroxy-naphthalin-3,6-disulfonsäure | rot |
| 59 | desgl. | 1-(3′-chlor-3′-phenylsulfonylpropionylamino)-8-hydroxynaphthalin-4,6-disulfonsäure | rot |
| 60 | desgl. | 1-(3′-chlor-3′-phenylsulfonylpropionylamino)-8-hydroxynaphthalin-4-sulfonsäure | rot |

Fortsetzung

| Beispiel | Diazokomponente<br>1 | Kupplungskomponente<br>2 | Farbton<br>3 |
|---|---|---|---|
| 61 | 1-Amino-4-chloracetylamino-benzol-2-sulfonsäure | 1-(3'-chlor-3'-phenylsulfonyl-propionylamino)-8-hydroxy-naphthalin-4-sulfonsäure | blaust. rot |
| 62 | desgl. | 1-[3'-(3"-chlor-3"-phenylsulfonyl-propionylamino)-benzoylamino]-8-hydroxynaphthalin-3,6-disulfonsäure | blaust. rot |
| 63 | desgl. | 1-[4'-(3"-chlor-3"-phenylsulfonyl-propionylamino)-benzoylamino)-8-hydroxynaphthalin-4,6-disulfonsäure | blaust. rot |
| 64 | desgl. | 1-[3'-(3"-chlor-3"-phenylsulfonylpropionylamino)-benzoylamino]-8-hydroxynaphthalin-4,6-disulfonsäure | blaust. rot |
| 65 | desgl. | 2-(3'-chlor-3'-phenylsulfonyl-propionylamino)-5-hydroxynaphthalin-7-sulfonsäure | scharlach |
| 66 | desgl. | 2-(3'-chlor-3'-phenylsulfonyl-propionylamino)-8-hydroxynapthalin-6-sulfonsäure | rot |
| 67 | desgl. | 2-(3'-chlor-3'-phenylsulfonyl-propionyl-N-methylamino)-8-hydroxy-naphthalin-6-sulfonsäure | rot |
| 68 | desgl. | 2-[4'-(3"-chlor-3"-phenylsulfonyl-propionylamino)-benzoylamino]-5-hydroxynaphthalin-7-sulfonsäure | scharlach |
| 69 | desgl. | 2-[3'-(3"-chlor-3"-phenylsulfonyl-propionylamino)-benzoylamino]-5-hydroxynaphthalin-7-sulfonsäure | scharlach |
| 70 | desgl. | 2-(3'-chlor-3'-phenylsulfonyl-propionylamino)-5-hydroxynaphthalin-1,7-disulfonsäure | scharlach |
| 71 | desgl. | 2-(3'-chlor-3'-phenylsulfonylpropionylamino)-8-hydroxynaphthalin-3,6-disulfonsäure | rot |
| 72 | desgl. | 1-(3'-chlor-3'-phenylsulfonyl-propionylamino)-8-hydroxynaphthalin-3,6-disulfonsäure | blaust. rot |
| 73 | desgl. | 1-(3'-chlor-3'-phenylsulfonyl-propionylamino)-8-hydroxynaphthalin-4,6-disulfonsäure | rot |
| 74 | 1-Amino-5-(3'-chlor-3'-phenyl-sulfonylpropionylamino)-benzol-2-sulfonsäure | 1-(4'-chloracetylamino-benzoyl-amino)-8-hydroxynaphthalin-3,6-disulfonsäure | rot |
| 75 | 1-Amino-4-(3'-chlor-3'-phenyl-sulfonylpropionylamino)-benzol-2-sulfonsäure | desgl. | blaust. rot |

Fortsetzung

| Beispiel | Diazokomponente 1 | Kupplungskomponente 2 | Farbton 3 |
|---|---|---|---|
| 76 | 1-Amino-4-(3'-chlor-3'-phenylsulfonylpropionylamino)-benzol-2-sulfonsäure | 1-(3'-chloracetylamino-benzoylamino)-8-hydroxynaphthalin-3,6-disulfonsäure | blaust. rot |
| 77 | 1-Amino-5-(3'-chlor-3'-phenylsulfonylpropionylamino)-benzol-2-sulfonsäure | 1-(3'-chloracetylaminobenzoylamino)-8-hydroxynaphthalin-3,6-disulfonsäure | rot |
| 78 | desgl. | 1-(4'-chloracetylaminobenzoylamino)-8-hydroxynaphthalin-4,6-disulfonsäure | rot |
| 79 | 1-Amino-4-(3'-chlor-3'-phenylsulfonylpropionylamino)-benzol-2-sulfonsäure | desgl. | blaust. rot |
| 80 | 1-Amino-4-(3'-chlor-3'-phenylsulfonylpropionylamino)-benzol-2-sulfonsäure | 1-(3'-chloracetylaminobenzoylamino)-8-hydroxynaphthalin-4,6-disulfonsäure | blaust. rot |
| 81 | 1-Amino-5-(3'-chlor-3'-phenylsulfonylpropionylamino)-benzol-2-sulfonsäure | desgl. | rot |
| 82 | desgl. | 2-(4'-chloracetylamino-benzoylamino)-5-hydroxynaphthalin-7-sulfonsäure | orange |
| 83 | 1-Amino-4-(3'-chlor-3'-phenylsulfonylpropionylamino)-benzol-2-sulfonsäure | desgl. | scharlach |
| 84 | 1-Amino-5-(3'-chlor-3'-phenylsulfonylpropionylamino)-benzol-2-sulfonsäure | 2(3'-chloroacetylaminobenzoylamino)-5-hydroxynaphthalin-7-sulfonsäure | orange |
| 85 | desgl. | desgl. | scharlach |

## Beispiel 86

0,1 Mol 3-Amino-N-methylbenzylamin-4-sulfonsäure werden in 200 ml Wasser heiß gelöst, auf 0—5° gekühlt und mit 35 ml konz. Salzsäure versetzt. Man diazotiert mit 7 g Natriumnitrit und tropft die Suspension des Diazoniumsalzes in eine neutrale auf 0—5° C gekühlte Suspension von 1-[3'-(3"-chlor-3"-phenylsulfonylpropionylamino)-benzoylamino]-8-hydroxynaphthalin-4,6-disulfonsäure in 600 ml Wasser. Der pH-Wert wird durch Eintropfen von Sodalösung auf 6—7 gehalten.

Nach beendeter Kupplung stellt man mit Sodalösung einen pH-Wert von 7,5—8 ein und tropft langsam 14 g Chloracetylchlorid zu. Die freiwerdende Salzsäure wird mit Sodalösung neutralisiert. Man rührt bis zur vollständigen Umsetzung, isoliert und trocknet. Man erhält einen Farbstoff, der Wolle und Baumwolle in brillanten Rottönen färbt.
Formel:

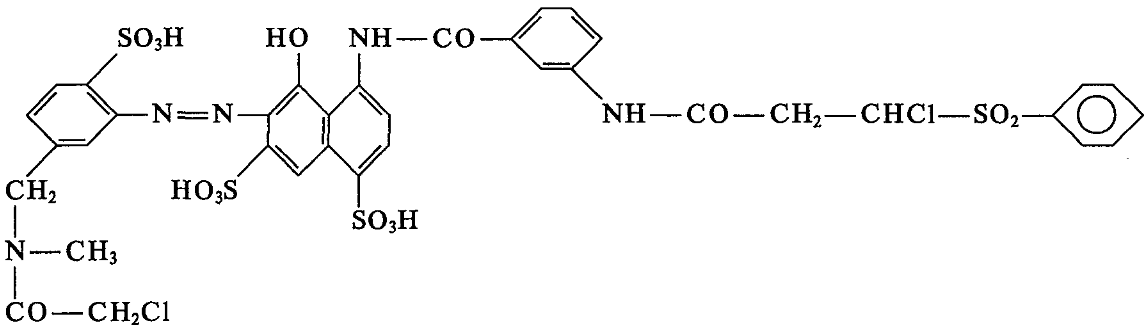

Nach dem gleichen Verfahren liefern auch die in Spalte 2 der folgenden Tabelle aufgeführten Kupplungskomponenten und die in Spalte 1 aufgeführten Diazokomponenten Farbstoffe, die nach der ebenfalls oben beschriebenen Acylierung mit den in Spalte 3 genannten Acylierungsmitteln Wolle und Baumwolle in guten Naßechtheiten färben.

Man erhält Farbstoffe mit ähnlichen Eigenschaften, wenn man statt der 3-Chlor-3-phenylsulfonylpropionylderivate die entsprechenden 2-Chlor-3-phenylsulfonylpropionyl-, 3-Brom-3-phenylsulfonylpropionyl- und 2-Brom-3-phenylsulfonylpropionylderivate und statt der Chloracetylderivate die entsprechenden Dichloracetyl- bzw. Bromacetylderivate einsetzt.

| Beispiel | Diazokomponente 1 | Kupplungskomponente 2 | Acylierungsmittel 3 | Farbton |
|---|---|---|---|---|
| 87 | 3-Amino-N-methylbenzylamin-4-sulfonsäure | 1[4'-(3"-chlor-3"-phenylsulfonylpropionylamino)-benzoylamino]-8-hydroxynaphthalin-3,6-disulfonsäure | Chloracetylchlorid | rot |
| 88 | desgl. | 1-[3'-(2"-chlor-3"-phenyl-sulfonylpropionylamino)-benzoylamino]-8-hydroxy-naphthalin-3,6-disulfonsäure | desgl. | rot |
| 89 | desgl. | 1-[4'-(3"-chlor-3"-phenyl-sulfonylpropionylamino)-benzoylamino]-8-hydroxy-naphthalin-4,6-disulfonsäure | desgl. | rot |
| 90 | desgl. | 2-[4'-(3"-chlor-3"-phenyl-sulfonylpropionylamino)-benzoylamino]-5-hydroxynaphthalin-7-sulfonsäure | desgl. | orange |
| 91 | desgl. | 2-[3'-(3"-chlor-3"-phenylsulfonylpropionylamino)-benzoylamino]-5-hydroxynaphthalin-7-sulfonsäure | desgl. | orange |

Fortsetzung

| Beispiel | Diazokomponente 1 | Kupplungskomponente 2 | Acylierungsmittel 3 | Farbton |
|---|---|---|---|---|
| 92 | 3-Amino-N-methylbenzylamin-4-sulfonsäure | 2-(3′-chlor-3′-phenylsulfonylpropionylamino)-5-hydroxynaphthalin-1,7-disulfonsäure | Chloracetylchlorid | orange |
| 93 | desgl. | 2-(3′-chlor-3′-phenylsulfonylpropionylamino)-8-hydroxynaphthalin-3,6-disulfonsäure | desgl. | rot |
| 94 | desgl. | 1-(3′-chlor-3′-phenylsulfonylpropionylamino)-8-hydroxynaphthalin-3,6-disulfonsäure | desgl. | rot |
| 95 | desgl. | 1-(3′-chlor-3′-phenylsulfonylpropionylamino)-8-hydroxynaphthalin-4,6-disulfonsäure | desgl. | rot |
| 96 | desgl. | 1-(3′-chlor-3′-phenylsulfonylpropionylamino)-8-hydroxynaphthalin-4-sulfonsäure | desgl. | rot |
| 97 | desgl. | 2-(2′-chlor-3′-phenylsulfonylpropionylamino)-5-hydroxynaphthalin-7-sulfonsäure | desgl. | orange |
| 98 | desgl. | 2-(3′-chlor-3′-phenylsulfonyl-propionylamino)-8-hydroxynaphthalin-6-sulfonsäure | desgl. | scharlach |
| 99 | desgl. | 2-(3′-chlor-3′-phenylsulfonylpropionyl-N-methylamino)-8-hydroxynaphthalin-6-sulfonsäure | desgl. | scharlach |
| 100 | 2-Amino-5-aminomethylennaphthalin-1-sulfonsäure | 1-[3′-(3″-chlor-3″-phenylsulfonylpropionylamino)-benzoylamino]-8-hydroxynaphthalin-4,6-disulfonsäure | desgl. | rot |
| 101 | 5-Amino-2-methoxybenzylamin-4-sulfonsäure | desgl. | desgl. | blaust. rot |

Fortsetzung

| Beispiel | Diazokomponente 1 | Kupplungskomponente 2 | Acylierungsmittel 3 | Farbton |
|---|---|---|---|---|
| 102 | 2-Amino-5-amino-methylen-naphthalin-1,7-disulfonsäure | 1-[3'-(3''-chlor-3''-phenylsulfonylpropionylamino)-benzoylamino]-8-hydroxy-naphthalin-4,6-disulfonsäure | Chloracetylchlorid | blaust. rot |
| 103 | 3-Amino-N-methyl benzylamin-4-sulfonsäure | 1-[3'-(2'',2''-dichlor-3''-phenylsulfonylpropionylamino)-benzoylamino]-8-hydroxy-naphthalin-4,6-disulfonsäure | desgl. | rot |
| 104 | desgl. | 1-(4'-chloracetylamino-benzoylamino)-8-hydroxynaphthalin-3,6-disulfonsäure | 3-Chlor-3-phenylsulfonylpropionylchlorid | rot |
| 105 | 2-Amino-5-amino-methylen-naphthalin-1-sulfonsäure | desgl. | desgl. | rot |
| 106 | 2-Amino-5-amino-methylen-naphthalin-1,7-disulfonsäure | desgl. | desgl. | rot |
| 107 | desgl. | 1-(3'-chloracetylamino-benzoylamino)-8-hydroxynaphthalin-3,6-disulfonsäure | desgl. | rot |
| 108 | 3-Amino-N-methylen-benzylamin-4-sulfonsäure | desgl. | desgl. | rot |
| 109 | 2-Amino-5-amino methylen-naphthalin-1-sulfonsäure | desgl. | desgl. | rot |
| 110 | 3-Amino-4-sulfobenzyl-N-methylamin | 1-(4'-chloracetylamino-8-hydroxynaphthalin-4,6-disulfonsäure | desgl. | rot |
| 111 | 2-Amino-5-amino-methylen-naphthalin-1-sulfonsäure | desgl. | desgl. | rot |
| 112 | 2-Amino-5-amino-methylen-naphthalin-1,7-disulfonsäure | desgl. | desgl. | rot |
| 113 | desgl. | 1-(3'-chloracetylamino-benzoylamino)-8-hydroxynaphthalin-4,6-disulfonsäure | desgl. | rot |

Fortsetzung

| Beispiel | Diazokomponente 1 | Kupplungskomponente 2 | Acylierungsmittel 3 | Farbton |
|---|---|---|---|---|
| 114 | 3-Amino-N-methylbenzylamin-4-sulfonsäure | 1-(3′-chloracetylamino-benzoylamino)-8-hydroxynaphthalin-4,6-disulfonsäure | 3-Chlor-3-phenylsulfonylpropionylchlorid | rot |
| 115 | 2-Amino-5-amino-methylen-naphthalin-1-sulfonsäure | desgl. | desgl. | rot |
| 116 | desgl. | 2-(4′-chloracetylamino-benzoylamino)-5-hydroxynaphthalin-7-sulfonsäure | desgl. | orange |
| 117 | 2-Amino-5-amino-methylen-naphthalin-1,4-disulfonsäure | desgl. | desgl. | orange |
| 118 | 3-Amino-N-methylbenzylamin-4-sulfonsäure | desgl. | desgl. | orange |
| 119 | desgl. | 2-(3′-chloracetylamino-benzoylamino)-5-hydroxynaphthalin-7-sulfonsäure | desgl. | orange |
| 120 | 2-Amino-5-amino-methylen-naphthalin 1-sulfonsäure | desgl. | desgl. | orange |
| 121 | 2-Amino-5-amino-methylennaphthalin-1-sulfonsäure | 1[4′-(3″-chlor-3″-phenylsulfonylpropionylamino)-benzoylamino]-8-hydroxy-naphthalin-3,6-disulfonsäure | Chloracetylchlorid | rot |
| 122 | desgl. | 1-[3′-(3″-chlor-3″-phenylsulfonylpropionylamino)-benzoylamino]-8-hydroxy-naphthalin-3,6-disulfonsäure | desgl. | rot |
| 123 | desgl. | 1-[4′-(3″-chlor-3″-phenylsulfonylpropionylamino)-benzoylamino]-8-hydroxy-naphthalin-4,6-disulfonsäure | desgl. | rot |
| 124 | desgl. | 2-[4′-(3″-chlor-3″-phenylsulfonylpropionylamino)-benzoylamino]-5-hydroxy-naphthalin-7-sulfonsäure | desgl. | scharlach |

Fortsetzung

| Beispiel | Diazokomponente 1 | Kupplungskomponente 2 | Acylierungsmittel 3 | Farbton |
|---|---|---|---|---|
| 125 | 2-Amino-5-aminomethylennaphthalin-1-sulfonsäure | 2-[3′-(3″-chlor-3″-phenylsulfonylpropionylamino)-benzoylamino]-5-hydroxy-naphthalin-7-sulfonsäure | Chloracetylchlorid | scharlach |
| 126 | desgl. | 2-(3′-chlor-3′-phenylsulfonylpropionylamino)-5-hydroxy-naphthalin-1,7-disulfonsäure | desgl. | scharlach |
| 127 | desgl. | 2-(3′-chlor-3′-phenylsulfonylpropionylamino)-8-hydroxy-naphthalin-3,6-disulfonsäure | desgl. | rot |
| 128 | desgl. | 1-(3′-chlor-3′-phenylsulfonylpropionylamino)-8-hydroxy-naphthalin-3,6-disulfonsäure | desgl. | rot |
| 129 | desgl. | 1-(3′-chlor-3′-phenylsulfonylpropionylamino)-8-hydroxy-naphthalin-4,6-disulfonsäure | desgl. | rot |
| 130 | desgl. | 1-(3′-chlor-3′-phenylsulfonylpropionylamino)-8-hydroxy-naphthalin-4-sulfonsäure | desgl. | rot |
| 131 | desgl. | 2-(3′-chlor-3′-phenylsulfonylpropionylamino)-5-hydroxy-naphthalin-7-sulfonsäure | desgl. | scharlach |
| 132 | desgl. | 2-(3′-chlor-3′-phenylsulfonylpropionylamino)-8-hydroxy-naphthalin-6-sulfonsäure | desgl. | rot |
| 133 | desgl. | 2-(3′-chlor-3′-phenylsulfonylpropionyl-N-methylamino)-8-hydroxynaphthalin-6-sulfonsäure | desgl. | rot |

Fortsetzung

| Beispiel | Diazokomponente 1 | Kupplungskomponente 2 | Acylierungsmittel 3 | Farbton |
|---|---|---|---|---|
| 134 | 2-Amino-5-aminomethylennaphthalin-1,7-disulfonsäure | 1[4′-(3″-chlor-3″-phenylsulfonylpropionylamino)-benzoylamino]-8-hydroxy-naphthalin-3,6-disulfonsäure | Chloracetylchlorid | rot |
| 135 | desgl. | 1-[3′-(3″-chlor-3″-phenyl-sulfonylpropionylamino)-benzoylamino]-8-hydroxy-naphthalin-3,6-disulfonsäure | desgl. | rot |
| 136 | desgl. | 1-[4′-(3″-chlor-3″-phenyl-sulfonylpropionylamino)-benzoylamino]-8-hydroxy-naphthalin-4,6-disulfonsäure | desgl. | rot |
| 137 | desgl. | 2-[4′-(3″-chlor-3″-phenylsulfonylpropionylamino)-benzoylamino]-5-hydroxy-naphthalin-7-sulfonsäure | desgl. | scharlach |
| 138 | desgl. | 2-[3′-(3″-chlor-3″-phenyl-sulfonylpropionylamino)-benzoylamino]-5-hydroxy-naphthalin-7-sulfonsäure | desgl. | scharlach |
| 139 | desgl. | 2-(3′-chlor-3′-phenylsulfonylpropionylamino)-5-hydroxy-naphthalin-1,7-disulfonsäure | desgl. | scharlach |
| 140 | desgl. | 2-(3′-chlor-3′-phenylsulfonylpropionylamino)-8-hydroxy-naphthalin-3,6-disulfonsäure | desgl. | rot |
| 141 | desgl. | 1-(3′-chlor-3′-phenylsulfonylpropionylamino)-8-hydroxy-naphthalin-3,6-disulfonsäure | desgl. | rot |
| 142 | desgl. | 1-(3′-chlor-3′-phenylsulfonylpropionylamino)-8-hydroxy-naphthalin-4,6-disulfonsäure | desgl. | rot |

| Bei-spiel | Diazokomponente 1 | Kupplungskomponente 2 | Acylierungsmittel 3 | Farbton |
|---|---|---|---|---|
| 143 | 2-Amino-5-amino-methylennaphthalin-1,7-disulfonsäure | 1-(3′-chlor-3′-phenyl-sulfonylpropionyl-amino)-8-hydroxy-naphthalin-4-sulfon-säure | Chloracetylchlorid | rot |
| 145 | desgl. | 2(3′-chlor-3′-phenyl-sulfonylpropionyl-amino)-5-hydroxy-naphthalin-7-sulfon-säure | desgl. | scharlach |
| 146 | desgl. | 2-(3′-chlor-3′-phenyl-sulfonylpropionyl-amino)-8-hydroxy-naphthalin-6-sulfon-säure | desgl. | scharlach |
| 147 | desgl. | 2-(3′-chlor-3′-phenyl-sulfonylpropionyl-N-methylamino)-8-hydroxynaphthalin-6-sulfonsäure | desgl. | rot |
| 148 | 7-Amino-3-amino-methylen-naphthalin-2-sulfonsäure | 1[4′-(3″-chlor-3″-phenylsulfonylpropio-nylamino)-benzoyl-amino]-8-hydroxy-naphthalin-3,6-di-sulfonsäure | desgl. | rot |
| 149 | desgl. | 1-[3′-(3″-chlor-3″-phenylsulfonylpropio-nylamino)-benzoyl-amino]-8-hydroxy-naphthalin-3,6-di-sulfonsäure | desgl. | rot |
| 150 | desgl. | 1-[4′-(3″-chlor-3″-phenylsulfonylpropio-nylamino)-benzoyl-amino]-8-hydroxy-naphthalin-4,6-di-sulfonsäure | desgl. | rot |
| 151 | desgl. | 2-[4′-(3″-chlor-3″-phenylsulfonylpropio-nylamino)-benzoyl-amino]-5-hydroxy-naphthalin-7-sulfon-säure | desgl. | scharlach |
| 152 | desgl. | 2-[3′-(3″-chlor-3″-phenylsulfonylpropio-nylamino)-benzoyl-amino]-5-hydroxy-naphthalin-7-sulfon-säure | desgl. | scharlach |

Fortsetzung

| Beispiel | Diazokomponente 1 | Kupplungskomponente 2 | Acylierungsmittel 3 | Farbton |
|---|---|---|---|---|
| 153 | 7-Amino-3-amino-methylen-naphthalin-2-sulfonsäure | 2-(3'-chlor-3'-phenyl-sulfonylpropionyl-amino)-5-hydroxy-naphthalin-1,7-di-sulfonsäure | Chloracetylchlorid | scharlach |
| 154 | desgl. | 2-(3'-chlor-3'-phenyl-sulfonylpropionyl-amino)-8-hydroxy-naphthalin-3,6-di-sulfonsäure | desgl. | rot |
| 155 | desgl. | 1-(3'-chlor-3'-phenyl-sulfonylpropionyl-amino)-8-hydroxy-naphthalin-3,6-di-sulfonsäure | desgl. | rot |
| 156 | desgl. | 2-(3'-chlor-3'-phenyl-sulfonylpropionyl-amino)-5-hydroxy-naphthalin-7-sulfon-säure | desgl. | scharlach |
| 157 | desgl. | 2-(3'-chlor-3'-phenyl-sulfonylpropionyl-amino)-8-hydroxy-naphthalin-6-sulfon-säure | desgl. | rot |

Beispiel 158

Wie in Beispiel 86 beschrieben, werden 0,1 Mol 3-Amino-N-methyl-benzylamino-4-sulfonsäure diazotiert und mit 0,1 Mol 1-(3'-Aminobenzoylamino)-8-hydroxynaphthalin-4,6-disulfonsäure zum Farbstoff der Formel

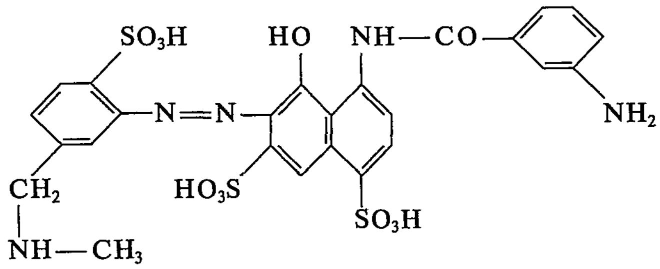

gekuppelt. Der ausgesalzene isolierte Farbstoff wird in 1000 ml Wasser gelöst und tropfenweise mit einer Lösung von 30 g 3-Chlor-3-phenylsulfonylpropionylchlorid in 80 ml Aceton versetzt. Man erhält den pH-Wert mit Sodalösung bei 6—7. Es wird 2 Stunden nachgerührt. Man stellt den pH-Wert auf 7.5—8, tropft 15 g Chloracetylchlorid zu und hält diesen pH-Wert mit Sodalösung. Der isolierte Farbstoff ist mit dem in Beispiel 86 beschriebenen identisch.

Beispiel 159

0,1 Mol 1,3-Diaminobenzol-4-sulfonsäure werden wie in Beispiel 27 beschrieben, mit 3-Chlor-3-phenylsulfonylpropionylchlorid acyliert und diazotiert.
In die Suspension des Diazoniumsalzes gibt man eine Lösung von 0.1 Mol 2-(2'-Aminoethylamino)-8-hydroxynaphthalin-6-sulfonsäure. Die freiwerdende Säure wird mit Natriumacetat abgefangen. Man

erhält einen Farbstoff der Formel

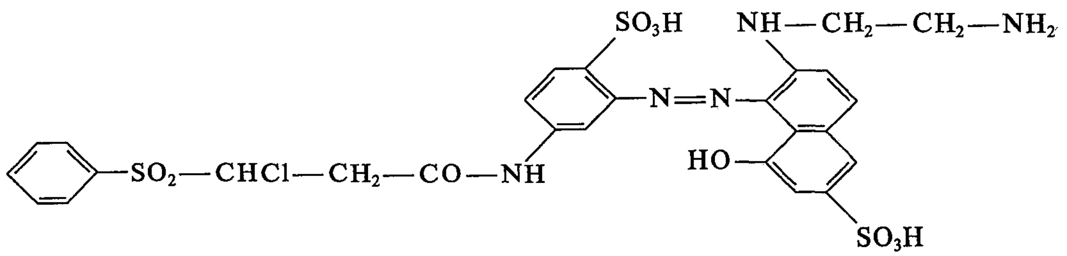

Nach beendeter Kupplung wird der Farbstoff ausgesalzen und isoliert. Die Paste wird in 750 ml Wasser gelöst und bei 0—5° C mit 15 g Chloracetylchlorid versetzt, wobei die freiwerdende Säure mit Sodalösung ständig auf pH 7.5—8 abgestumpft wird. Man rührt nach, salzt aus und isoliert. Der im Vakuum bei 50—60° C getrocknete Farbstoff liefert auf Wolle blaustichig rote Färbungen mit guten Naßechtheiten.

Nach dem gleichen Verfahren liefern auch die in Spalte 2 der folgenden Tabelle aufgeführten Kupplungskomponenten und die in Spalte 1 aufgeführten Diazokomponente Farbstoffe, die nach der ebenfalls oben beschriebenen Acylierung mit den in Spalte 3 genannten Acylierungsmitteln Wolle und Baumwolle in guten Naßechtheiten färben.

Man erhält Farbstoffe mit ähnlichen Eigenschaften, wenn man statt der 3-Chlor-3-phenylsulfonylpropionylderivate die entsprechenden 2-Chlor-3-phenylsulfonylpropionyl-, 3-Brom-3-phenylsulfonylpropionyl- und 2-Brom-3-phenylsulfonylpropionylderivate und statt der Chloracetylderivate die entsprechenden Dichloracetyl- bzw. Bromacetylderivate einsetzt.

| Beispiel | Diazokomponente 1 | Kupplungskomponente 2 | Acylierungsmittel 3 | Farbton |
|---|---|---|---|---|
| 160 | 1-Amino-5-(3'-chlor-3'-phenylsulfonylpropionylamino)-benzol-2-sulfonsäure | 2-(2'-Aminoethylamino)-naphthalin-6-sulfonsäure | Chloracetylchlorid | gelbst. rot |
| 161 | 1-Amino-4-(3'-chlor-3'-phenylsulfonylpropionylamino)-benzol-2-sulfonsäure | desgl. | desgl. | rot |
| 162 | desgl. | 2-(2'-Aminoethylamino)-8-hydroxy-naphthalin-6-sulfonsäure | desgl. | blaust. rot |
| 163 | desgl. | 2-(2'-Aminoethylamino)-naphthalin-7-sulfonsäure | desgl. | rot |
| 164 | 1-Amino-5-(3'-chlor-3'-phenylsulfonylpropionylamino)-benzol-2-sulfonsäure | desgl. | desgl. | gelbst. rot |
| 165 | desgl. | 2-Amino-5-amino-methylen-naphthalin-7-sulfonsäure | desgl. | orange |
| 166 | 1-Amino-4-(3'-chlor-3'-phenylsulfonylpropionylamino)-benzol-2-sulfonsäure | desgl. | desgl. | orange |

Fortsetzung

| Beispiel | Diazokomponente<br>1 | Kupplungskomponente<br>2 | Acylierungsmittel<br>3 | Farbton |
|---|---|---|---|---|
| 167 | 1-Amino-5-(3'-chlor-3'-phenylsulfonylpropionylamino)-benzol-2,4-disulfonsäure | 2-Amino-5-aminomethylen-naphthalin-7-sulfonsäure | Chloracetylchlorid | rot |
| 168 | desgl. | 2-Amino-5-aminomethylen-naphthalin | desgl. | rot |
| 169 | 1-Amino-4-(3'-chlor-3'-phenylsulfonylpropionylamino)-benzol-2-sulfonsäure | desgl. | desgl. | scharlach |
| 170 | 1-Amino-5-(3'-chlor-3'-phenylsulfonylpropionylamino)-benzol-2-sulfonsäure | desgl. | desgl. | orange |
| 171 | 1-Amino-4-(3'-chlor-3'-phenylsulfonylpropionylamino)-benzol-2,5-disulfonsäure | desgl. | desgl. | scharlach |
| 172 | desgl. | desgl. | desgl. | scharlach |
| 173 | 1-Amino-4-(3'-chlor-3'-phenylsulfonylpropionylamino)-benzol | desgl. | desgl. | orange |
| 174 | 1-Amino-5-chloracetylaminobenzol-2-sulfonsäure | desgl. | 3-Chlor-3-phenylsulfonylpropionylchlorid | orange |
| 175 | desgl. | 2-(2'-Aminoethylamino)-8-hydroxy-naphthalin-6-sulfonsäure | desgl. | blaust. rot |
| 176 | desgl. | 2-(2'-Aminoethylamino)-naphthalin-6-sulfonsäure | desgl. | gelbst. rot |
| 177 | desgl. | 2-(2'-Aminoethylamino)-naphthalin-7-sulfonsäure | desgl. | gelbst. rot |
| 178 | 1-Amino-4-chloracetylaminobenzol-2-sulfonsäure | desgl. | desgl. | rot |
| 179 | desgl. | 2-(2'-Aminoethylamino)-naphthalin-6-sulfonsäure | desgl. | rot |
| 180 | desgl. | 2-(2'-Aminoethylamino)-8-hydroxy-naphthalin-6-sulfonsäure | desgl. | blaust. rot |

Fortsetzung

| Beispiel | Diazokomponente 1 | Kupplungskomponente 2 | Acylierungsmittel 3 | Farbton |
|---|---|---|---|---|
| 181 | 1-Amino-4-chloracetylaminobenzol | 2-Amino-5-aminomethylennaphthalin-7-sulfonsäure | 3-Chlor-3-phenylsulfonylpropionylchlorid | orange |
| 182 | 1-Amino-5-chloracetylaminobenzol-2,4-disulfonsäure | 2-Amino-5-aminomethylennaphthalin | desgl. | rot |

Beispiel 183

Man löst 0,1 Mol des Farbstoffs der Formel

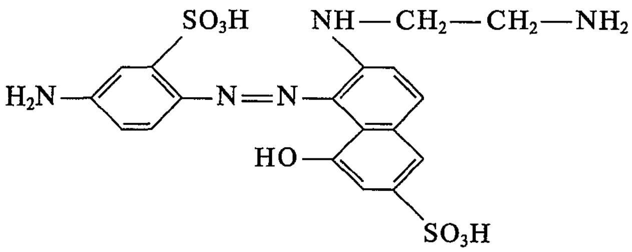

der durch Kuppeln des Diazoniumsalzes der 1-Amino-4-nitro-benzol-2-sulfonsäure auf 2-(2'-Aminoethylamino)-8-hydroxynaphthalin-6-sulfonsäure und anschließender Reduktion der Nitrogruppe mit Natriumsulfid hergestellt wurde, in 750 ml Wasser und läßt innerhalb einer Stunde bei 0—5° C 29.4 g 3-Chlor-3-phenylsulfonylpropionylchlorid gelöst in 80 ml Aceton eintropfen, wobei die freiwerdende Salzsäure mit 10%iger Sodalösung ständig auf pH 5—6 abgestumpft wird. Man rührt ca. 2 Stunden nach, stellt den pH-Wert auf 7.5—8 und gibt tropfenweise 14 g Chloracetylchlorid zu. Auch jetzt wird der pH-Wert mit Sodalösung auf 7.5—8 gehalten. Nach beendeter Umsetzung wird der Farbstoff isoliert und im Vakuum bei 50—60° C getrocknet. Er ist identisch mit dem in Beispiel 162 beschriebenen.

Beispiel 184

0.1 Mol des durch Kuppeln von diazotierter 1-Amino-5-chloracetylaminobenzol-2,4-disulfonsäure auf 3-Aminophenylharnstoff erhaltenen Monoazofarbstoffs werden in 900 ml Wasser gelöst. Bei einer Temperatur von 0 bis 5° werden 29,4 g 3-Chlor-3-phenylsulfonylpropionylchlorid in 80 ml Aceton zugetropft und mit Sodalösung ein pH-Wert von 5—6 gehalten. Nach beendeter Reaktion wird der entstandene Farbstoff mit Kaliumchlorid ausgesalzen, abgesaugt und im Vakuum getrocknet. Der Farbstoff der Formel

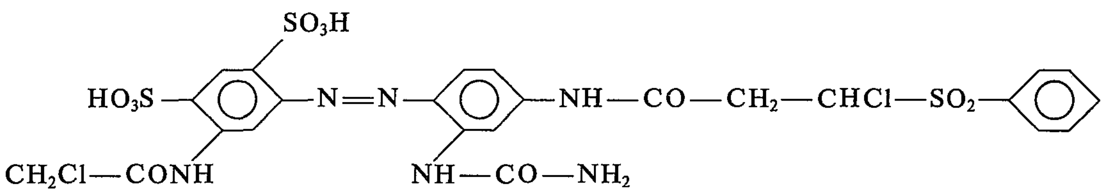

liefert gelbe Färbungen auf Wolle und Baumwolle, die sich durch gute Naß- und Lichtechtheiten auszeichnen.

Nach dem gleichen Verfahren liefern auch die in Spalte 2 der folgenden Tabelle aufgeführten Kupplungskomponenten und die in Spalte 1 aufgeführten Diazokomponente Farbstoffe, die nach der ebenfalls oben beschriebenen Acylierung mit den in Spalte 3 genannten Acylierungsmitteln Wolle und Baumwolle in guten Naßechtheiten färben.

Man erhält Farbstoffe mit ähnlichen Eigenschaften, wenn man statt der 3-Chlor-3-phenylsulfonylpropionylderivate die entsprechenden 2-Chlor-3-phenylsulfonylpropionyl-, 3-Brom-3-phenylsulfonylpropionyl-, 2-Brom-3-phenylsulfonylpropionylderivate und statt der Chloracetylderivate die entsprechenden Dichloracetyl- bzw. Bromacetylderivate einsetzt.

| Beispiel | Diazokomponente 1 | Kupplungskomponente 2 | Acylierungsmittel 3 | Farbton |
|---|---|---|---|---|
| 185 | 1-Amino-5-chloracetylaminobenzol- | 1-Amino-naphthalin-6-sulfonsäure | 3-Chlor-3-phenylsulfonylpropionylchlorid | gelbbraun |
| 186 | desgl. | 1-Amino-naphthalin-7-sulfonsäure | desgl. | gelbbraun |
| 187 | desgl. | 1-Amino-3-methylbenzol | desgl. | gelb |
| 188 | desgl. | 1-Amino-3-acetylaminobenzol | desgl. | gelb |
| 189 | desgl. | 1-Amino-2-methoxy-5-methylbenzol | desgl. | rotst. gelb |
| 190 | desgl. | 1-Amino-2,5-dimethoxybenzol | desgl. | rotst. gelb |
| 191 | 1-Amino-4-chloracetylaminobenzol-2,5-disulfonsäure | desgl. | desgl. | rotst. gelb |
| 192 | desgl. | 1-Amino-naphthalin-6-sulfonsäure | desgl. | gelbbraun |
| 193 | desgl. | 1-Amino-naphthalin-7-sulfonsäure | desgl. | gelbbraun |
| 194 | desgl. | 1-Amino-3-methylbenzol | desgl. | gelb |
| 195 | desgl. | 1-Amino-3-acetylaminobenzol | desgl. | gelb |
| 196 | desgl. | 3-Aminophenylharnstoff | 3-Chlor-3-phenylsulfonylpropionylchlorid | gelb |
| 197 | desgl. | 3-Aminophenylharnstoff | desgl. | gelb |
| 200 | desgl. | 1-Amino-2-methoxy-5-methylbenzol | desgl. | rotst. gelb |
| 201 | desgl. | desgl. | desgl. | rotst. gelb |
| 202 | desgl. | 1-Amino-3-methylbenzol | desgl. | gelb |
| 203 | desgl. | 1-Amino-3-methyl-6-methoxybenzol | desgl. | gelb |
| 204 | desgl. | 1-Amino-3-acetylaminobenzol | desgl. | gelb |
| 205 | desgl. | 3-Aminophenylharnstoff | desgl. | gelb |
| 206 | 1-Amino-3-chloracetylamino-2-methylbenzol-5-sulfonsäure | desgl. | desgl. | gelb |

Fortsetzung

| Beispiel | Diazokomponente 1 | Kupplungskomponente 2 | Acylierungsmittel 3 | Farbton |
|---|---|---|---|---|
| 207 | 1-Amino-3-chlor-acetylarninobenzol-6-sulfonsäure | 3-Aminophenylharnstoff | 3-Chlor-3-phenylsulfonylpropionylchlorid | gelb |
| 208 | 1-Amino-4-chlor-acetylaminobenzol-2-sulfonsäure | desgl. | desgl. | gelb |
| 209 | 2-Amino-6-chlor-acetylamino-naphthalin-4,8-disulfonsäure | desgl. | desgl. | gelb |
| 210 | 1-Amino-5-(3'-chlor-3'-phenylsulfonylpropionylamino)benzol-2,4-disulfonsäure | desgl. | Chloracetylchlorid | gelb |
| 211 | 1-Amino-4-(3'-chlor-3'-phenylsulfonylpropionylamino)-benzol-2,5-disulfonsäure | desgl. | desgl. | gelb |
| 212 | 1-Amino-4-(3'-chlor-3'-phenylsulfonylpropionylamino)-benzol-2,6-disulfonsäure | desgl. | desgl. | gelb |
| 213 | desgl. | 1-Amino-naphthalin-6-sulfonsäure | desgl. | gelbbraun |
| 214 | desgl. | 1-Amino-naphthalin-7-sulfonsäure | desgl. | gelbbraun |
| 215 | desgl. | 1-Amino-3-acetyl-aminobenzol | desgl. | gelb |
| 216 | desgl. | 1-Amino-2-methoxy-5-methylbenzol | desgl. | rotst. gelb |
| 217 | desgl. | 1-Amino-3-methyl-benzol | desgl. | gelb |
| 218 | desgl. | Anilin | desgl. | gelb |

Beispiel 219

In eine neutrale Lösung von 0,1 Mol des nach den Angaben in Beispiel 27 hergestellten Kondensationsproduktes aus 1,3-Diamino-benzol-4-sulfonsäure und 3-Chlor-3-phenylsulfonylpropionylchlorid in 500 ml Wasser werden bei 10–15° C 0.1 Mol einer Lösung von diazotierter 1-Amino-5-chloracetyl-aminobenzol-2,4-disulfonsäure (Beispiel 1) gegeben. Das Gemisch wird mit 150 ml einer 20%igen Natriumacetatlösung versetzt. Die Kupplung verläuft bei pH 4 rasch und vollständig. Nach 15 Minuten scheidet sich der Farbstoff kristallin ab. Er wird isoliert und bei 30—40° C im Vakuum getrocknet. Der erhaltene Monoazofarbstoff entspricht der Formel

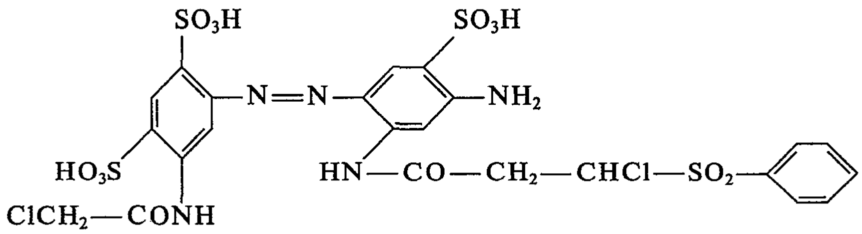

und stellt getrocknet ein orangenfarbenes Pulver dar, das sich in Wasser mit gelber Farbe löst und Baumwolle und Wolle nach den üblichen Techniken des Reaktivdruckes oder der Reaktivfärbung in rotstichig-gelben Tönen färbt.

Nach dem gleichen Verfahren liefern auch die in Spalte 2 der folgenden Tabelle aufgeführten Kupplungskomponenten und die in Spalte 1 aufgeführten Diazokomponente Farbstoffe, die Wolle und Baumwolle in guten Naßechtheiten färben.

Man erhält Farbstoffe mit ähnlichen Eigenschaften, wenn man statt der 3-Chlor-3-phenylsulfonylpropionylderivate die entsprechenden 2-Chlor-3-phenylsulfonylpropionyl-, 3-Brom-3-phenylsulfonylpropionyl- und 2-Brom-3-phenylsulfonylpropionylderivate und statt der Chloracetylderivate die entsprechenden Dichloracetyl- bzw. Bromacetylderivate verwendet.

| Beispiel | Diazokomponente<br>1 | Kupplungskomponente<br>2 | Farbton |
|---|---|---|---|
| 220 | 1-Amino-4-chloracetylamino-benzol-2,5-disulfonsäure | 1-Amino-5-(3′-chlor-3′-phenylsulfonylpropionylamino)-benzol-2-sulfonsäure | rotst. gelb |
| 221 | 1-Amino-4-chloracetylamino-benzol-2,6-disulfonsäure | desgl. | rotst. gelb |
| 222 | 1-Amino-3-chloracetylamino-benzol-6-sulfonsäure | desgl. | rotst. gelb |
| 223 | 1-Amino-4-chloracetylamino-benzol-2-sulfonsäure | desgl. | rotst. gelb |
| 224 | 2-Amino-6-chloracetylamino-naphthalin-4,8-disulfonsäure | desgl. | rotst. gelb |
| 225 | 1-Amino-5-(3′-chlor-3′-phenylsulfonylpropionylamino)benzol-2,4-disulfonsäure | 1-Amino-5-chloracetylamino-benzol-2-sulfonsäure | rotst. gelb |
| 226 | 1-Amino-4-(3′-chlor-3′-phenylsulfonylpropionylamino)-benzol-2,5-disulfonsäure | desgl. | rotst. gelb |
| 227 | 1-Amino-4-(3′-chlor-3′-phenylsulfonylpropionylamino)-benzol-2,6-disulfonsäure | 1-Amino-5-chloracetylamino-benzol-2-sulfonsäure | rost. gelb |

## Beispiel 228

Wie in Beispiel 218 beschrieben, kuppelt man 0.1 Mol 1-Amino-5-(3′-chlor-3′-phenylsulfonylpropionylamino)-benzol-2-sulfonsäure mit 0.1 Mol diazotierter 2-Amino-5-aminomethyl-naphthalin-1,7-disulfonsäure. Der entstandene Monoazofarbstoff wird isoliert, in 1000 ml Wasser gelöst und bei einem pH-Wert von 7.5—8.0 bei 0—5° C mit 14 g Chloracetylchlorid versetzt. Die freiwerdende Säure wird mit Sodalösung abgestumpft. Nach beendeter Reaktion wird der Farbstoff isoliert, im Vakuum bei 50—60° C getrocknet. Er hat die Formel

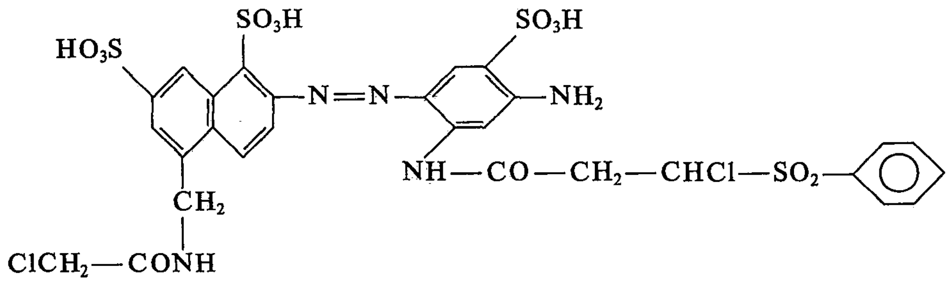

löst sich im Wasser mit gelber Farbe und färbt Wolle und Baumwolle in rotstichig gelben Tönen. Nach dem gleichen Verfahren liefern auch die in Spalte 2 der folgenden Tabelle aufgeführten Kupplungskomponenten und die in Spalte 1 aufgeführten Diazokomponenten Farbstoffe, die nach der ebenfalls oben beschriebenen Acylierung mit den in Spalte 3 genannten Acylierungsmitteln Wolle und Baumwolle in guten Naßechtheiten färben.

Man erhält Farbstoffe mit ähnlichen Eigenschaften, wenn man statt der 3-Chlor-3-phenylsulfonylpropionylderivate die entsprechenden 2-Chlor-3-phenylsulfonylpropionyl-, 3-Brom-3-phenylsulfonylpropionyl- und 2-Brom-3-phenylsulfonylpropionylderivate und statt der Chloracetylderivate die entsprechenden Dichloracetyl- bzw. Bromacetylderivate einsetzt.

| Beispiel | Diazokomponente<br>1 | Kupplungskomponente<br>2 | Acylierungsmittel<br>3 | Farbton |
|---|---|---|---|---|
| 229 | 2-Amino-5-amino-methylen-naphthalin-1-sulfonsäure | 1-Amino-5-(3'-chlor-3'-phenyl-sulfonylpropionylamino)-benzol-2-sulfonsäure | Chloracetylchlorid | rotst. gelb |
| 230 | 3-Amino-4-sulfo-benzyl-N-methylamin | desgl. | desgl. | rotst. gelb |
| 231 | 2-Amino-5-amino-methylen-naphthalin-7-sulfonsäure | desgl. | desgl. | rotst. gelb |
| 232 | desgl. | 1-Amino-5-chloracetyl-aminobenzol-2-sulfonsäure | 3-Chlor-3-phenylsulfonylpropionylchlorid | rotst. gelb |
| 233 | 2-Amino-5-amino-methylen-naphthalin-1,7-disulfonsäure | desgl. | desgl. | rotst. gelb |
| 234 | 2-Amino-5-amino-methylen-naphthalin-1-sulfonsäure | desgl. | desgl. | rotst. gelb |
| 235 | 3-Amino-4-sulfobenzyl-N-methylamin | desgl. | desgl. | rotst. gelb |

Beispiel 236

0.1 Mol des durch Kuppeln von diazotierter 2-Amino-5-aminomethylen-naphthalin-1,7-disulfonsäure auf 3-Aminophenylharnstoff erhaltene Monoazofarbstoff werden in 900 ml Wasser gelöst und bei einer Temperatur von 0–5° C und einem pH-Wert von 5–6 mit 29.4 g 3-Chlor-3-phenylsulfonylpropionylchlorid gelöst in 80 ml Aceton versetzt. Nach beendeter Umsetzung wird die Lösung auf einen pH-Wert von 7.5–8 gestellt und mit 14 g Chloracetylchlorid versetzt. Die entstehende Säure wird in beiden Stufen mit Sodalösung auf den jeweiligen pH-Wert abgestumpft. Nach vollständiger Umsetzung wird ausgesalzen, isoliert und im Vakuum bei 50–60° C getrocknet. Der Farbstoff der Formel

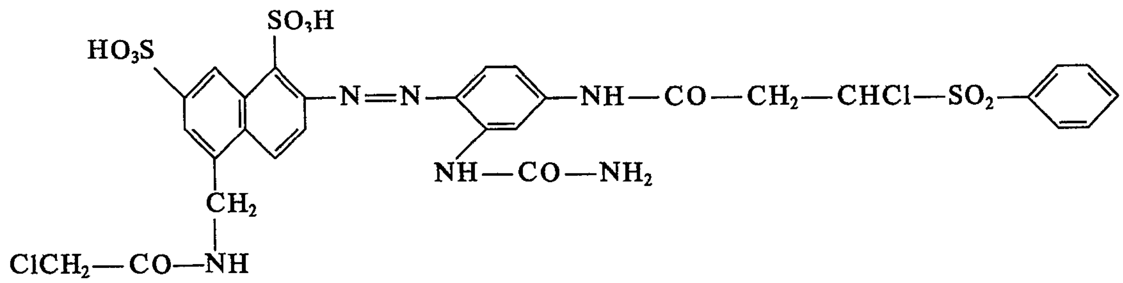

liefert gelbe Färbungen auf Wolle und Baumwolle, die sich durch gute Naß- und Lichtechtheiten auszeichnen.

Einen Farbstoff mit ähnlichen Eigenschaften erhält man, wenn man den gleichen Monoazofarbstoff zuerst mit Chloracetylchlorid und dann mit 3-chlor-3-phenylsulfonylpropionylchlorid acyliert.

Nach dem gleichen Verfahren liefern auch die in Spalte 2 der folgenden Tabelle aufgeführten Kupplungskomponenten und die in Spalte 1 aufgeführten Diazokomponente Farbstoffe, die nach der ebenfalls oben beschriebenen Acylierung mit den in Spalte 3 genannten Acylierungsmitteln Wolle und Baumwolle in guten Naßechtheiten färben.

Man erhält Farbstoff mit ähnlichen Eigenschaften, wenn man statt der 3-Chlor-3-phenylsulfonylpropionylderivate die entsprechenden 2-Chlor-3-phenylsulfonylpropionyl-, 3-Brom-3-phenylsulfonylpropionyl- und 2-Brom-3-phenylsulfonylpropionylderivate und statt der Chloracetylderivate die entsprechenden Dichloracetyl- bzw. Bromacetylderivate einsetzt.

| Beispiel | Diazokomponente<br>1 | Kupplungskomponente<br>2 | Acylierungskomponente<br>3 | Farbton |
|---|---|---|---|---|
| 237 | 2-Amino-5-amino-methylen-naphthalin-1,7-disulfonsäure | Anilin | 3-Chlor-3-phenylsulfonylpropionylchlorid-Chloracetylchlorid | gelb |
| 238 | desgl. | 1-Amino-naphthalin-6-sulfonsäure | desgl. | gelbbraun |
| 239 | desgl. | 1-Amino-naphthalin-7-sulfonsäure | desgl. | gelbbraun |
| 240 | desgl. | 1-Amino-3-methyl-benzol | 3-Chlor-3-phenylsulfonylpropionylchlorid — Chloracetylchlorid | gelb |
| 241 | desgl. | 1-Amino-3-acetyl-aminobenzol | desgl. | gelb |
| 242 | desgl. | 1-Amino-2-methoxy-5-methylbenzol | desgl. | rotst. gelb |
| 243 | desgl. | 1-Amino-2,5-di-methoxybenzol | desgl. | rotst. gelb |
| 244 | 2-Amino-5-amino-methylen-naphthalin-1-sulfonsäure | 3-Aminophenylharn-stoff | desgl. | gelb |
| 245 | desgl. | 2-Amino-naphthalin-7-sulfonsäure | desgl. | rotst. gelb |
| 246 | desgl. | 1-Amino-naphthalin-6-sulfonsäure | desgl. | rotst. gelb |
| 247 | 3-Amino-4-sulfobenzyl-N-methylamin | desgl. | desgl. | rotst. gelb |

Fortsetzung

| Beispiel | Diazokomponente 1 | Kupplungskomponente 2 | Acylierungskomponente 3 | Farbton |
|---|---|---|---|---|
| 248 | 3-Amino-4-sulfobenzyl-N-methylamin | 1-Amino-naphthalin-7-sulfonsäure | 3-Chlor-3-phenylsulfonylpropionylchlorid — Chloracetylchlorid | rotst. gelb |
| 249 | 2-Amino-5-amino-methylen-naphthalin-7-sulfonsäure | desgl. | desgl. | rotst. gelb |

Beispiel 250

Zu einer Lösung von 0.1 Mol saurem Kupplungsprodukt aus 1-Amino-8-hydroxynaphthalin-3,6-disulfonsäure und diazotierter 1-Amino-5-chloracetylaminobenzol-2,4-disulfonsäure (Beispiel 1) wird bei pH 8 und 0—5° C eine Suspension des Diazoniumsalzes aus 1-Amino-5-(3'-chlor-3'-phenylsulfonylpropionylamino)-benzol-2-sulfonsäure (hergestellt aus 0.1 Mol 1,3-Diaminobenzol-4-sulfonsäure entsprechend Beispiel 27) zugegeben. Während der Kupplung hält man einen pH von 8 und stellt nach Beendigung der Reaktion auf pH 6.
Der Farbstoff

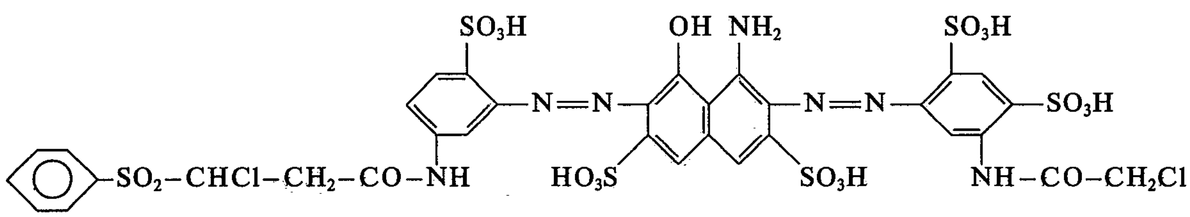

wird mit 100 Teilen Kochsalz ausgesalzen, abgesaugt und im Vakuum bei 40° C getrocknet. Auf Baumwolle erhält man beim Färben aus langer Flotte ein Schwarz. Einen ähnlichen Farbstoff erhält man, wenn man statt 1-Amino-8-hydroxynaphthalin-3,6-disulfosäure 1-Amino-8-hydroxynaphthalin-4,6-disulfonsäure verwendet.
Man erhält Farbstoffe mit ähnlichen Eigenschaften, wenn man statt der 3-Chlor-3-phenylsulfonylpropionylderivate die entsprechenden 2-Chlor-3-phenylsulfonylpropionyl-, 3-Brom-3-phenylsulfonylpropionyl- und 2-Brom-3-phenylsulfonylpropionylderivate und statt der Chloracetylderivate die entsprechenden Dichloracetyl- bzw. Bromacetylderivate einsetzt.

Beispiel 251

0.1 Mol der Kupferkomplexverbindung der Formel

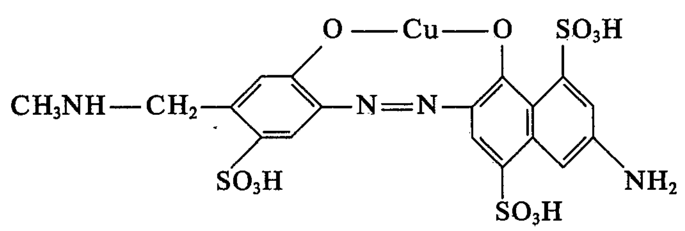

werden in 3000 ml Wasser bei pH 6 gelöst unter Rühren, werden bei einer Temperatur von 0—5° C 29,4 g 3-Chlor-3-phenylsulfonylpropionylchlorid in 80 ml Aceton eingetropft und mit 20%iger Sodalösung ein pH-Wert von 6 eingehalten. Nach beendeter Reaktion wird der pH-Wert auf 7.5—8 gestellt. Man tropft jetzt nochmals 14 g Chloracetylchlorid unter Sodazusatz zu. Der Farbstoff wird mit Natriumchlorid ausgesalzen, isoliert und bei 50—60° C im Vakuum getrocknet. Man erhält ein dunkles Pulver, das Baumwolle in echten, violetten Tönen färbt.
Man erhält Farbstoffe mit ähnlichen Eigenschaften, wenn man zur Acylierung statt 3-Chlor-3-phenylsulfonylpropionylchlorid 3-Brom-3-phenylsulfonylpropionylchlorid, 2-Chlor-3-phenylsulfonylpropionylchlorid und 2-Brom-3-phenylsulfonylpropionylchlorid, bzw. statt Chloracetylchlorid Bromacetylchlorid und Dichloracetylchlorid verwendet.

**Patentansprüche**

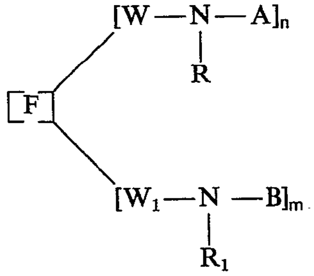

(I)

worin

F = Rest eines organischen Farbstoffs
W und $W_1$ = direkte Bindung oder Brückenglied
R und $R_1$ = Wasserstoff oder Alkyl

A = 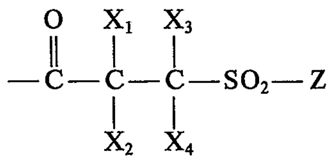

$X_1-X_4$ = Wasserstoff oder abspaltbarer Rest, wobei mindestens ein Rest $X_1-X_4$ für einen abspaltbaren Rest steht,
Z = gegebenenfalls substituiertes Phenyl,

B = 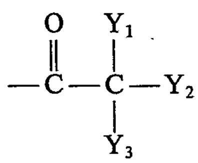

worin $Y_1-Y_3$ = Wasserstoff oder abspaltbarer Rest, wobei mindestens ein Rest $Y_1-Y_3$ für einen abspaltbaren Rest steht,
m und n = Zahl von 1 bis 4, vorzugsweise von 1 bis 2,

wobei W und $W_1$ an ein C-Atom eines aromatisch-carbocyclischen oder aromatisch-heterocyclischen Ringes des Chromophors gebunden sind.

2. Farbstoffe der Formeln

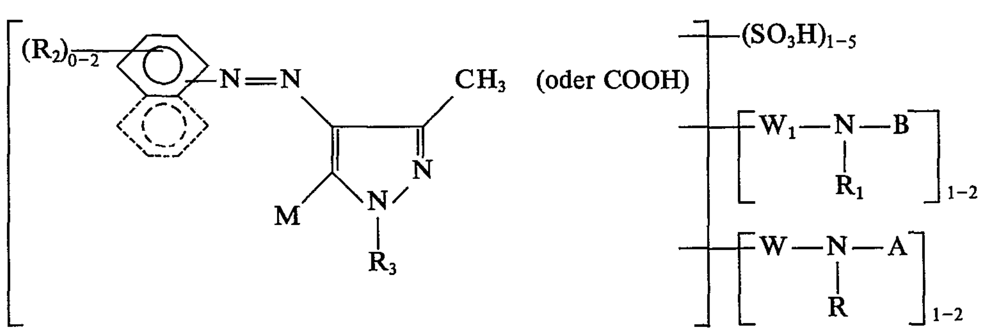

worin

M = OH, $NH_2$, $NR_3R_4$, $OR_3$,
$R_2$ = Alkyl, Alkoxy, Halogen, insbesondere Cl,
$R_3$ und $R_4$ = Wasserstoff, Alkyl, Aryl, Hetaryl oder Aralkyl,

und worin R, $R_1$, W, $W_1$, A und B die in Anspruch 1 angegebene Bedeutung besitzen,

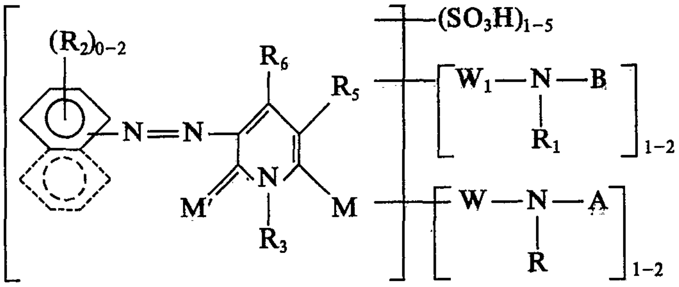

worin

M' = O, $NR_3$
$R_5$ = $-COOR_3$, $-CONR_3R_4$, $-CN$, $-CH_2-SO_3H$ oder $-CH_2-NR_3R_4$
$R_6$ = $-M$, $-R_3$ oder $-R_5$

und worin R, $R_1$, W, $W_1$, A, B, M, $R_2$ und $R_3$ die oben angegebene Bedeutung besitzen,

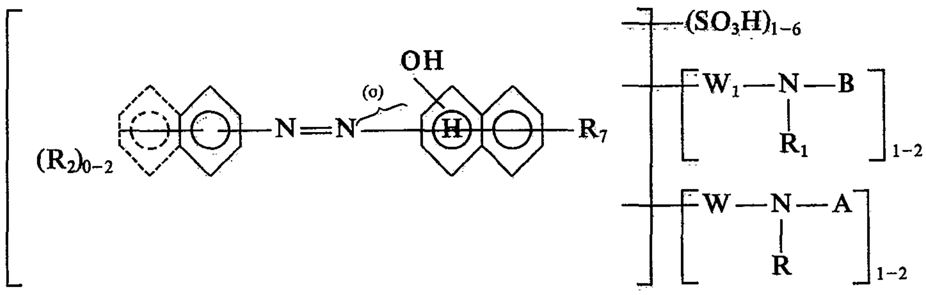

worin

$R_7$ = Wasserstoff, $-NR_3-CO-R_8$, $-NR_3-SO_2-R_8$
$R_8$ = Alkyl, Aryl, Hetaryl und Aralkyl
o = ortho-ständige Stellung der jeweiligen Reste

und worin R, $R_1$, W, $W_1$, A, B und $R_2$ die oben angegebene Bedeutung besitzen,

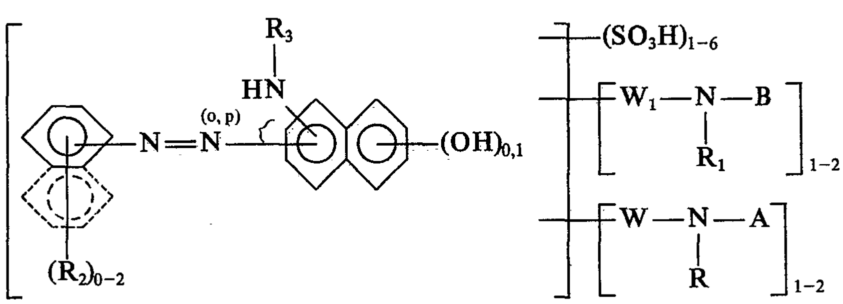

worin

(o, p) = ortho- oder paraständige Stellung der jeweiligen Reste

und worin R, $R_1$, W, $W_1$, A, B, $R_2$ und $R_3$ die oben angegebene Bedeutung besitzen,

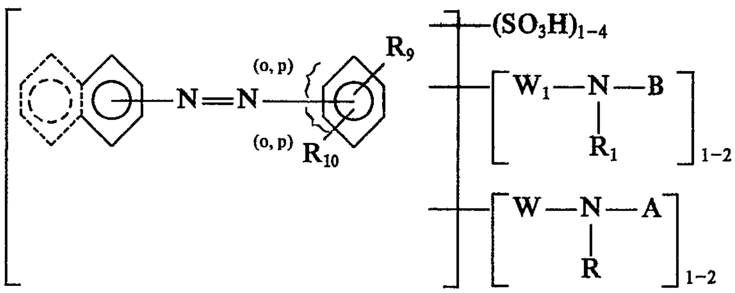

worin

$R_9$ und $R_{10}$ = Wasserstoff, $R_8$, $-OR_3$, Halogen, $-NR_3R_4$, $-COOR_3$, $-NR_3-COR_4$, $-NR_3-COR_4$, $-O-COR_4$, $-NR_3-SO_2R_4$, $-O-SOR_2R_4$, $-NR_3-CO-NR_3R_4$

und worin W, $W_1$, R, $R_1$, A, B, $R_3$, $R_4$ und $R_8$ die oben angegebene Bedeutung besitzen,

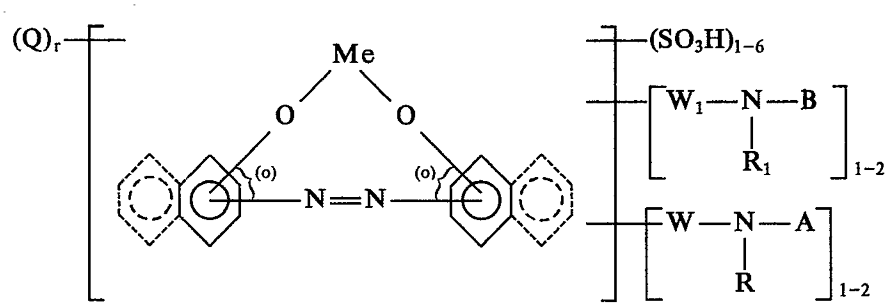

worin

Me = Cu, Cr
Q = Alkyl, Alkoxy, Halogen, $-NO_2$, Acylamino wie $CH_3-CO-NR_3-$, $-COOR_3$, $-CONR_3R_4$, $-SO_2-NR_3R_4$
r = 0–4

und worin R, $R_1$, $R_3$, $R_4$, W, $W_1$, A und B die oben angegebene Bedeutung besitzen,

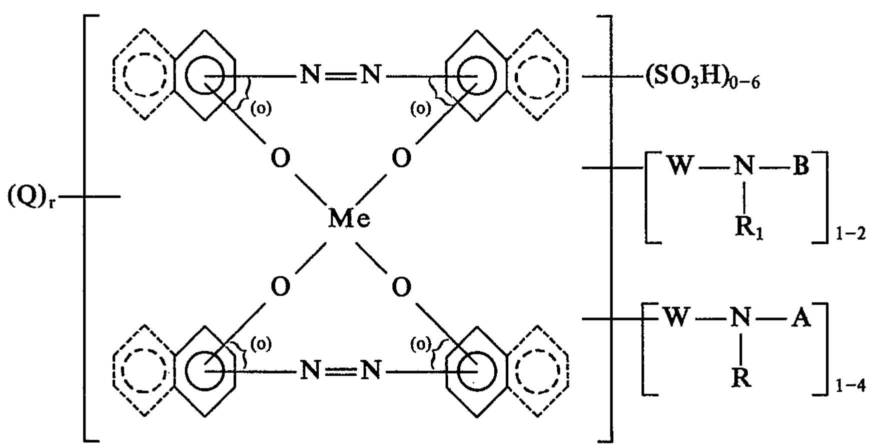

worin

Me = Co, Cr
r = 0–8
o = ortho-ständige Stellung der jeweiligen Reste

und worin R, $R_1$, W, $W_1$, A, B und Q die oben angegebene Bedeutung besitzen,

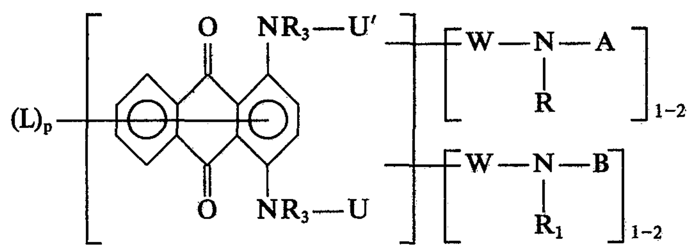

worin

L = Substituent, wie Sulfo oder Carboxy,
p = 0–4,
U = gegebenenfalls durch O oder S unterbrochener, aliphatischer, cycloaliphatischer, araliphatischer oder aromatischer Rest,
U' = Wasserstoff oder U

und worin W, $W_1$, R, $R_1$, A, B und $R_3$ die oben angegebene Bedeutung besitzen,

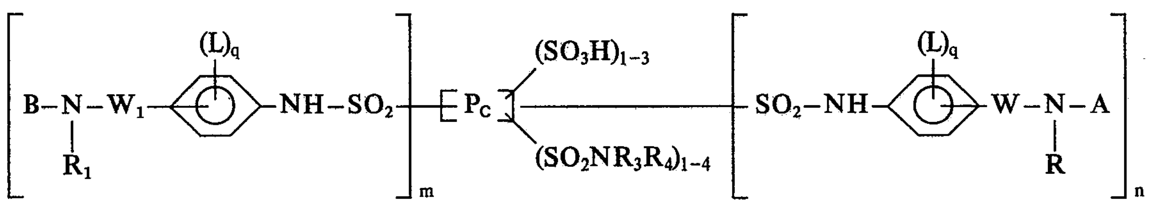

worin

Pc = für einen Phthalocyanin-Rest steht
L = Substituent, insbesondere Sulfo oder Carboxy
q = 0–4.

und worin R, $R_1$, $R_3$, $R_4$, W, $W_1$, A, B, m und n die oben angegebene Bedeutung besitzen,

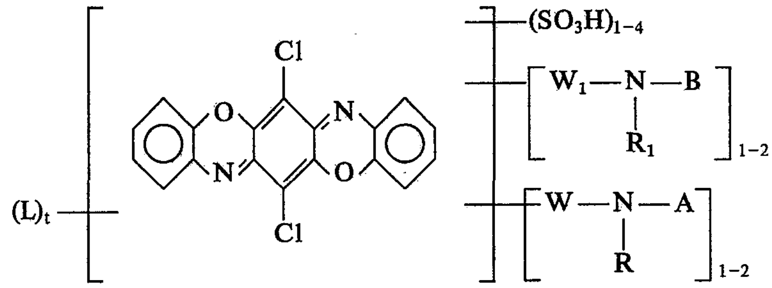

worin

L = Substituent, insbesondere Halogen, $C_{1-4}$-Alkyl, $C_{1-4}$-Alkoxy oder Carboxy
t = 0 bis 3

und worin W, $W_1$, R, $R_1$, A und B die oben angegebene Bedeutung besitzen,

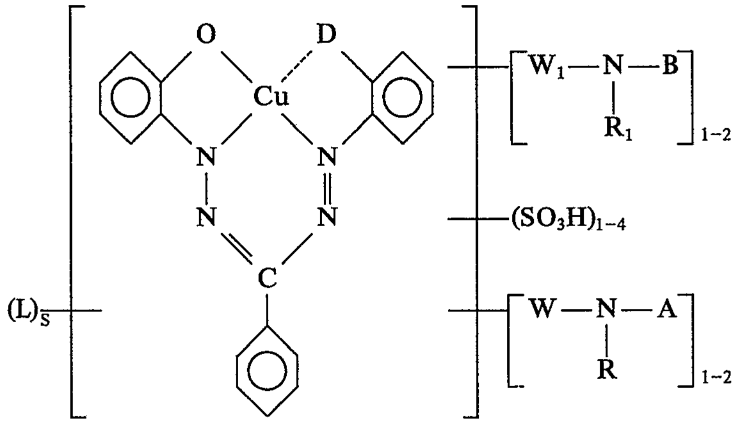

worin

L = Substituent, insbesondere Halogen, $C_{1-4}$-Alkyl, $C_{1-4}$-Alkoxy, Alkylsulfonyl, Aminosulfonyl, unkondensierte Phenylreste oder Carboxy
S = 0–6
D = zur Komplexbildung befähigte Gruppe, —OH, —COOH oder —$SO_3H$,

und worin W, $W_1$, R, $R_1$, A und B die oben angegebene Bedeutung besitzen.

3. Farbstoffe der Formel

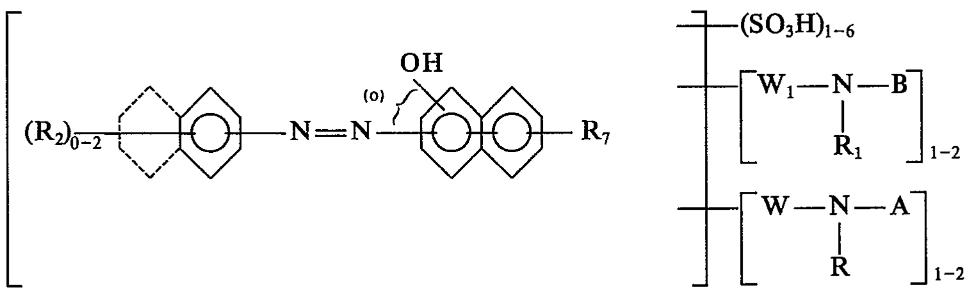

worin

R = Wasserstoff oder Alkyl
$R_1$ = Wasserstoff oder Alkyl
W und $W_1$ = direkte Bindung oder Brückenglied
$R_2$ = Alkyl, Alkoxy, Halogen
$R_7$ = Wasserstoff, —$NR_3$—$COR_8$, oder —$NR_3$—$SO_2$—$R_8$

wobei

$R_3$ = Wasserstoff, Alkyl, Aryl, Hetaryl oder Aralkyl

und

$R_8$ = Alkyl, Aryl, Hetaryl oder Aralkyl

A =

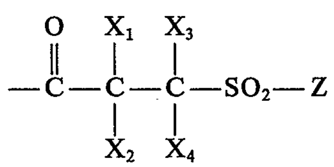

wobei $X_1$—$X_4$ und Z die in Anspruch 1 angegebene Bedeutung besitzen,

und

B = 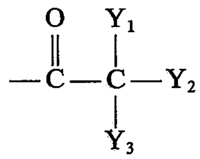

worin $Y_1-Y_3$ die in Anspruch 1 angegebene Bedeutung besitzen.

4. Farbstoffe der Ansprüche 1—3 mit

A = 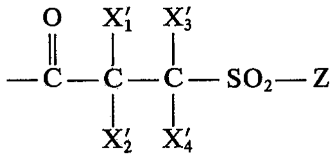

worin

$X'_1-X'_4$ = Wasserstoff oder Halogen wobei mindestens ein Rest $X'_1-X'_4$ für Halogen steht und

B = 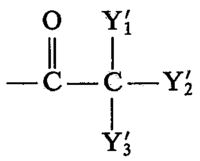

worin

$Y'_1-Y'_3$ = Wasserstoff, Chlor oder Brom, wobei mindestens ein Rest $Y'_1-Y'_3$ für Chlor oder Brom steht,

wobei Z die im Anspruch 1 angegebene Bedeutung besitzt.

5. Farbstoffe der Ansprüche 1—3 mit

A = 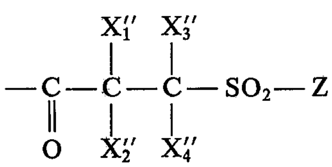

worin

$X''_1$ oder $X''_3$ = Halogen, das andere Wasserstoff,
$X''_2$ und $X''_4$ = Wasserstoff,

und

B = 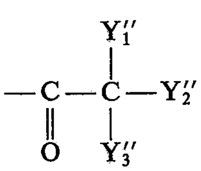

worin

$Y''_1$ = Wasserstoff
$Y''_2$ bis $Y''_3$ = Chlor oder Brom

wobei Z die in Anspruch 1 angegebene Bedeutung besitzt.

6. Farbstoffe der Ansprüche 1—3 mit

A 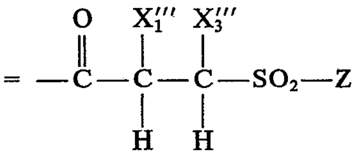

worin

| | |
|---|---|
| $X_1'''$ | = Cl oder Br |
| $X_3'''$ | = Wasserstoff, |

und

B 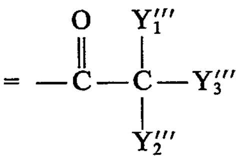

worin

| | |
|---|---|
| $Y_1'''$ | = Chlor oder Brom |
| $Y_2'''-Y_3'''$ | = Wasserstoff |

und worin Z die in Anspruch 1 angegebene Bedeutung besitzt.

7. Verwendung der Farbstoffe der Ansprüche 1 – 6 zum Färben und Bedrucken von hydroxylgruppenhaltigen und stickstoffhaltigen Materialien.

**Claims**

1. Reactive dyestuffs of the formula

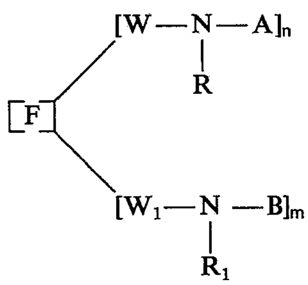

(I)

wherein

| | |
|---|---|
| F | = the radical of an organic dyestuff, |
| W and $W_1$ | = direct bonds or bridge members, |
| R and $R_1$ | = hydrogen or alkyl, |

A 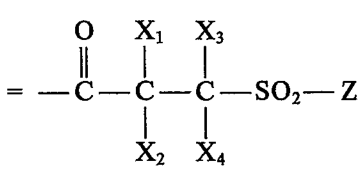

| | |
|---|---|
| $X_1-X_4$ | = hydrogen or radicals which can be split off, at least one of the radicals $X_1-X_4$ representing a radical which can be split off, |
| Z | = optionally substituted phenyl, |

B 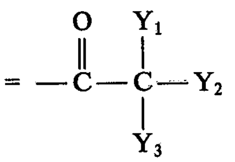

wherein

$Y_1-Y_3$ = hydrogen or radicals which can be split off, at least one of the radicals $Y_1-Y_3$ representing a radical which can be split off,

m and n = numbers from 1 to 4, preferably from 1 to 2, W and $W_1$ being bonded to a C atom of an aromatic-carbocyclic or aromatic-heterocyclic ring of the chromophore.

2. Dyestuffs of the formulae

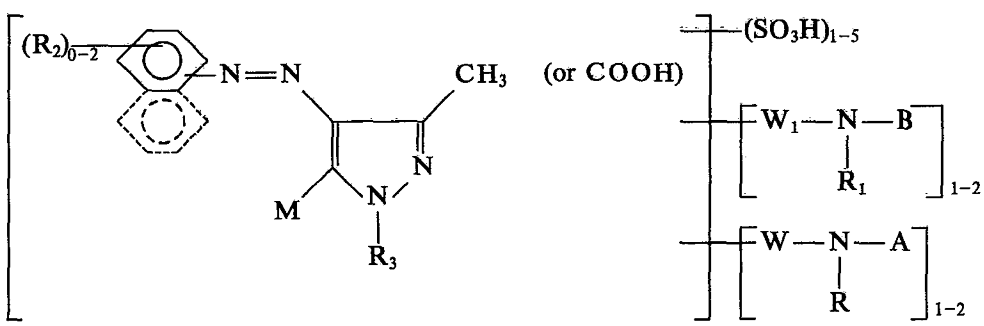

wherein

M = OH, $NH_2$, $NR_3R_4$ or $OR_3$,
$R_2$ = alkyl, alkoxy or halogen, in particular Cl, and
$R_3$ and $R_4$ = hydrogen, alkyl, aryl, hetaryl oder aralkyl,

and wherein R, $R_1$, W, $W_1$, A and B have the meaning given in Claim 1,

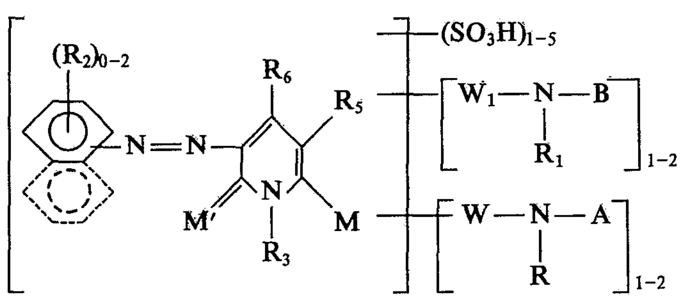 (IV)

wherein

M' = O or $NR_3$,
$R_5$ = $-COOR_3$, $-CONR_3R_4$, $-CN$, $-CH_2-SO_3H$ or $-CH_2-NR_3R_4$ and
$R_6$ = $-M$, $-R_3$ or $-R_5$

and wherein R, $R_1$, W, $W_1$, A, B, M, $R_2$ and $R_3$ have the abovementioned meaning,

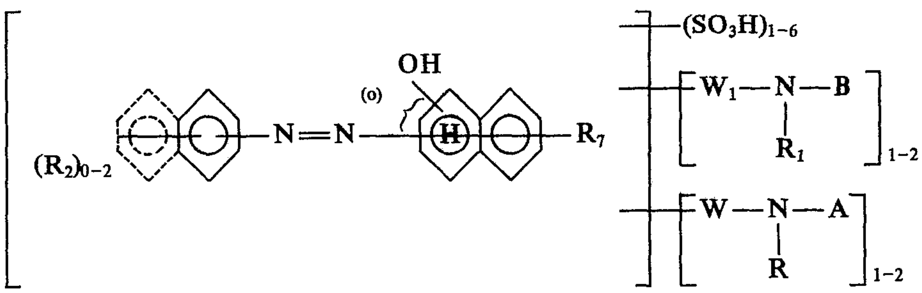

wherein

$R_7$ = hydrogen, $-NR_3-CO-R_8$ or $-NR_3-SO_2-R_8$,
$R_8$ = alkyl, aryl, hetaryl or aralkyl and
o = means that the particular radicals are in the ortho-position relative to one another,

and wherein R, $R_1$, W, $W_1$, A, B and $R_2$ have the abovementioned meaning,

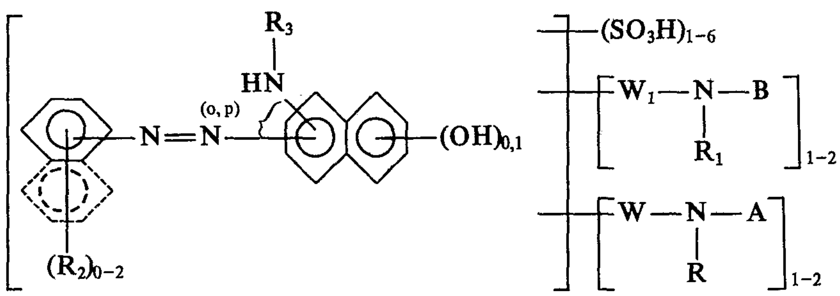

wherein

(o, p) = means that the particular radicals are in the ortho- or para-position relative to one another

and wherein R, $R_1$, W, $W_1$, A, B, $R_2$ and $R_3$ have the abovementioned meaning,

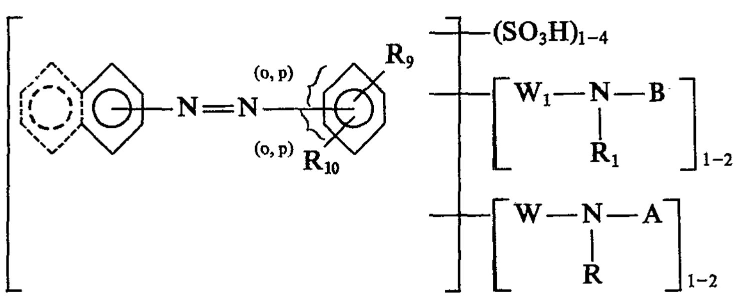

wherein

$R_9$ and $R_{10}$ = hydrogen, $R_8$, $-OR_3$, halogen, $-NR_3R_4$, $-COOR_3$, $-NR_3-COR_4$, $-NR_3-COR_4$, $-O-COR_4$, $-NR_3-SO_2R_4$, $-O-SOR_2R_4$ or

and wherein W, $W_1$, R, $R_1$, A, B, $R_3$, $R_4$ and $R_8$ have the abovementioned meaning,

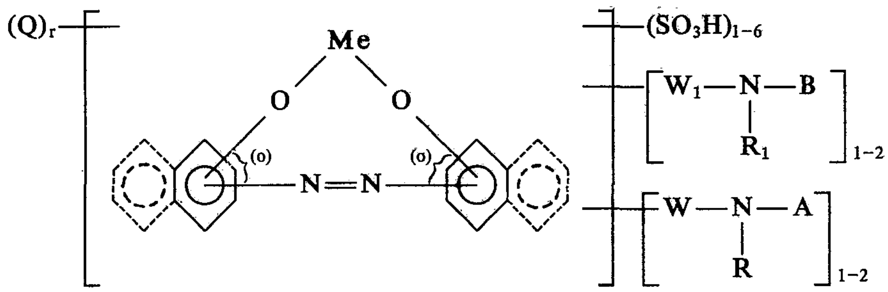

wherein

Me = Cu or Cr,
Q = alkyl, alkoxy, halogen, $-NO_2$, acylamino, such as $CH_3-CO-NR_3-$, $-COOR_3$, $-CONR_3R_4$ or $-SO_2-NR_3R_4$ and
r = a number from 0 to 4,

and wherein R, $R_1$, $R_3$, $R_4$, W, $W_1$, A and B have the abovementioned meaning,

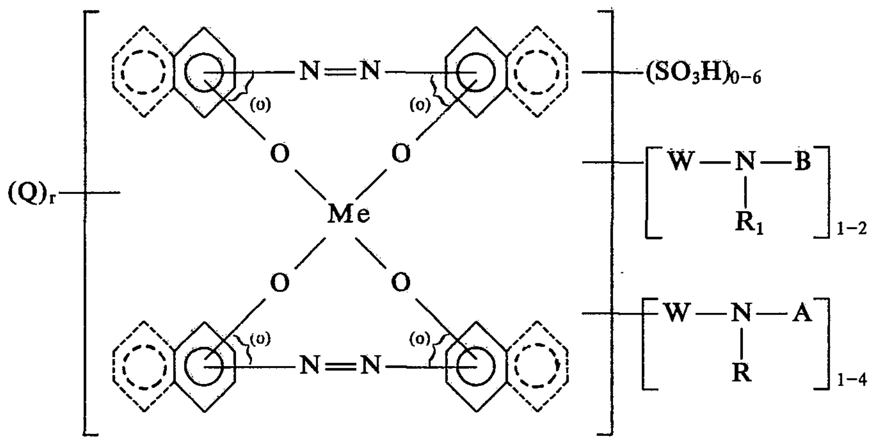

wherein

Me = Co or Cr,
r = a number from 0 to 8 and
o = means that the particular radicals are in the ortho-position relative to one another,

and wherein R, $R_1$, W, $W_1$, A, B and Q have the abovementioned meaning,

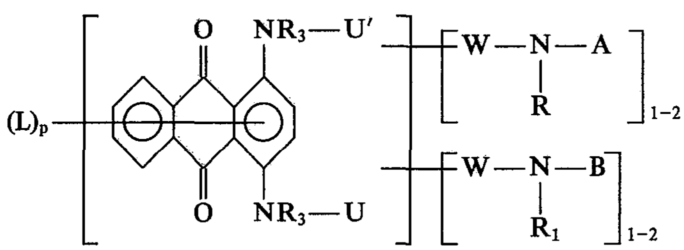

(X)

wherein

L = a substituent, such as sulpho or carboxyl,
p = a number from 0 to 4,
U = an aliphatic, cycloaliphatic, araliphatic or aromatic radical which is optionally interrupted by O or S and
U' = hydrogen or U,

and wherein W, $W_1$, R, $R_1$, A, B and $R_3$ have the abovementioned meaning,

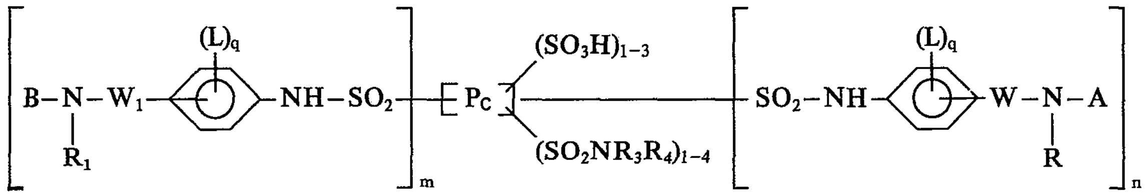

wherein

Pc = represents a phthalocyanine radical,
L = a substituent, in particular sulpho or carboxyl, and
q = a number from 0 to 4,

and wherein R, $R_1$, $R_3$, $R_4$, W, $W_1$, A, B, m and n have the abovementioned meaning,

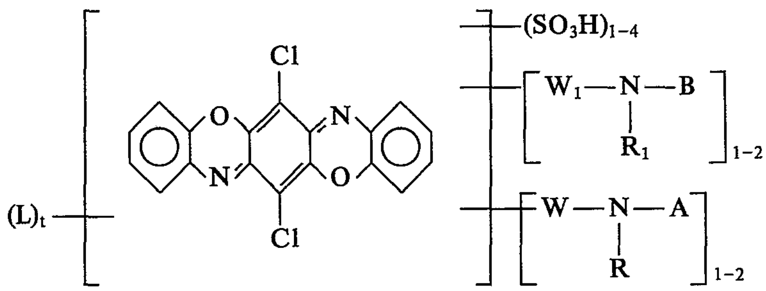

wherein

L = a substituent, in particular halogen, $C_{1-4}$-alkyl, $C_{1-4}$-alkoxy or carboxyl and
t = a number from 0 to 3,

and wherein W, $W_1$, R, $R_1$, A and B have the abovementioned meaning,

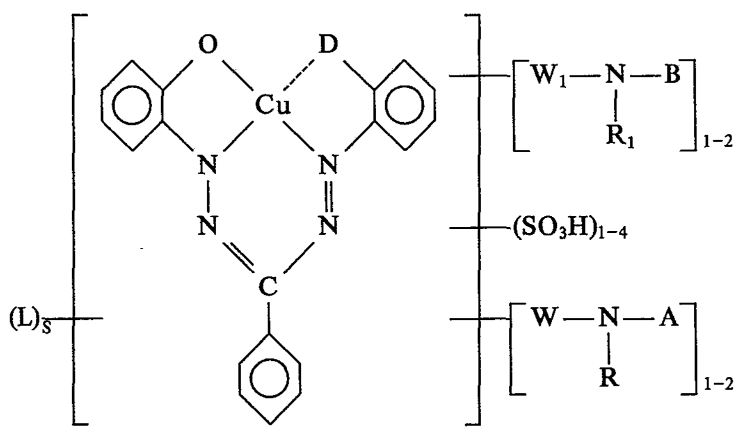

wherein

L = a substituent, in particular halogen, $C_{1-4}$-alkyl, $C_{1-4}$-alkoxy, alkylsulphonyl, aminosulphonyl, non-fused phenyl radicals or carboxyl,
S = a number from 0 to 6 and
D = a group which is capable of forming a complex, —OH, —COOH or —$SO_3H$,

and wherein W, $W_1$, R, $R_1$, A and B have the abovementioned meaning.

3. Dyestuffs of the formula

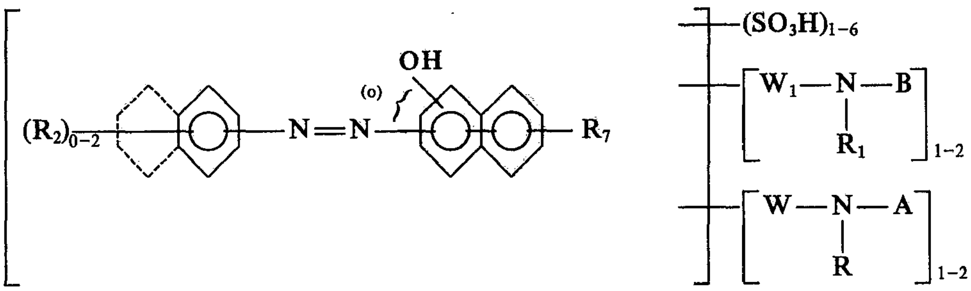

wherein

R = hydrogen or alkyl,
$R_1$ = hydrogen or alkyl,
W and $W_1$ = are direct bonds or bridge members,
$R_2$ = alkyl, alkoxy or halogen,
$R_7$ = hydrogen, $-NR_3-COR_8$ or $-NR_3-SO_2-R_8$,

wherein

$R_3$ = hydrogen, alkyl, aryl, hetaryl or aralkyl and
$R_8$ = alkyl, aryl, hetaryl or aralkyl,

A = 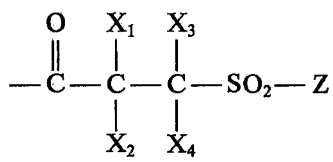

wherein $X_1-X_4$, and Z have the meaning given in Claim 1, and

B = 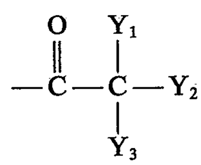

wherein $Y_1-Y_3$ have the meaning given in Claim 1.

4. Dyestuffs of Claims 1–3, in which

A = 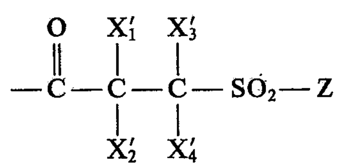

wherein

$X'_1-X'_4$ = hydrogen or halogen, at least one of the radicals $X'_1-X'_4$ representing halogen, and

B = 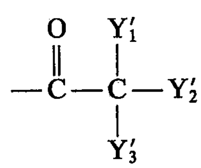

wherein

$Y'_1-Y'_3$ = hydrogen, chlorine or bromine, at least one of the radicals $Y'_1-Y'_3$ representing chlorine or bromine,

and wherein Z has the meaning given in Claim 1.

5. Dyestuffs of Claims 1–3, in which

A = 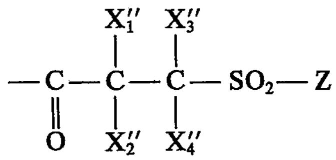

wherein

| | |
|---|---|
| $X_1''$ or $X_3''$ | = halogen and the other radical $X_1''$ oder $X_3''$ = halogen and |
| $X_2''$ and $X_4$ | = hydrogen, and |

B = 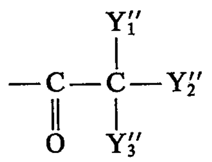

wherein

| | |
|---|---|
| $Y_1''$ | = hydrogen and |
| $Y_2''$ and $Y_3''$ | = chlorine or bromine, and |

wherein Z has the meaning given in Claim 1.

6. Dyestuffs of Claims 1–3, in which

A = 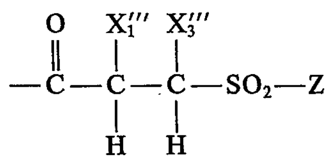

wherein

| | |
|---|---|
| $X_1'''$ | = Cl or Br and |
| $X_3'''$ | = hydrogen, and |

B = 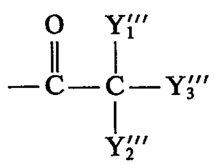

wherein

| | |
|---|---|
| $Y_1'''$ | = chlorine or bromine and |
| $Y_2'''$ and $Y_3'''$ | = hydrogen, and |

wherein Z has the meaning given in Claim 1.

7. Use of the dyestuffs of Claims 1–6 for dyeing and printing materials containing hydroxyl groups of nitrogen.

**Revendications**

1. Colorants réactifs de formule

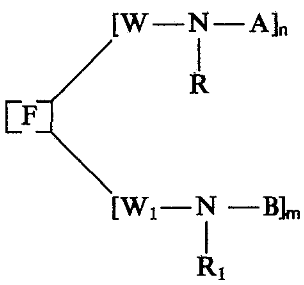

(I)

dans laquelle

F = reste d'un colorant organique,
W et $W_1$ = liaison directe ou pont,
R et $R_1$ = hydrogène ou groupe alkyle,

A = 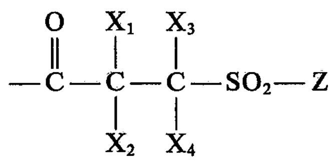

$X_1 - X_4$ = hydrogène ou reste éliminable, au moins l'un des restes $X_1 - X_4$ représentant un reste éliminable,
Z = groupe phényle éventuellement substitué,

B = 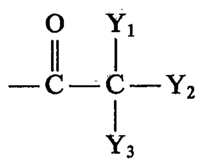

dans laquelle

$Y_1 - Y_3$ = hydrogène ou reste éliminable, l'un au moins des restes $Y_1 - Y_3$ représentant un reste éliminable,
m et n = nombre de 1 à 4, de préférence de 1 à 2,

W et $W_1$ étant liés à un atome de corbone d'un noyau aromatique-carbocyclique ou aromatique-hétérocyclique du chromophore.

2. Colorants de formules

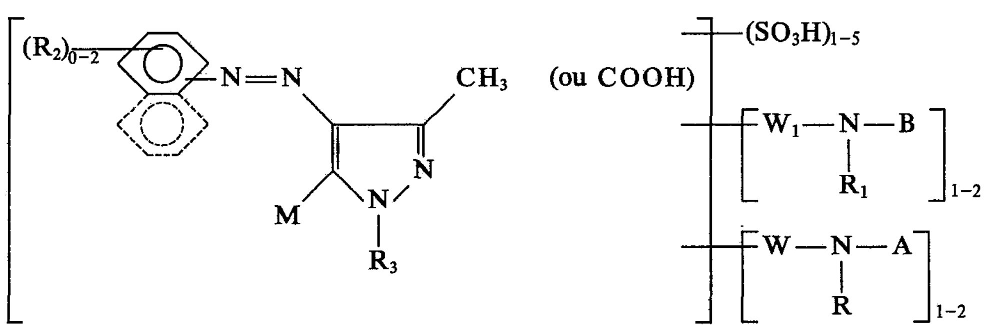

dans lesquelles

M = OH, $NH_2$, $NR_3R_4$ or $OR_3$,
$R_2$ = groupe alkyle, alkoxy, halogène, notamment Cl,
$R_3$ et $R_4$ = hydrogène, le groupe alkyle, aryle, hétéro-aryle ou aralkyle,

et R, $R_1$, W, $W_1$, A et B ont la définition donnée dans la revendication 1,

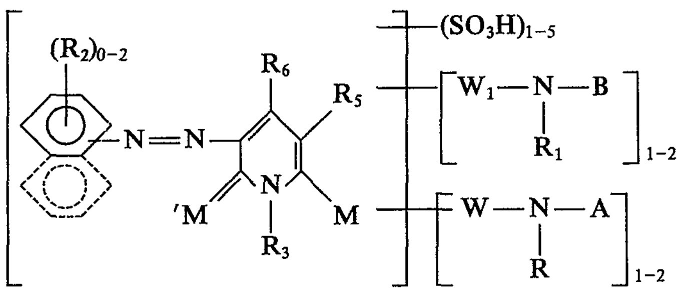

dans laquelle

M' = O, $NR_3$
$R_5$ = $-COOR_3$, $-CONR_3R_4$, $-CN$, $-CH_2-SO_3H$ ou $-CH_2-NR_3R_4$
$R_6$ = $-M$, $-R_3$ ou $-R_5$

et R, $R_1$, W, $W_1$, A, B, M, $R_2$ et $R_3$ ont la définition indiquée ci-dessus,

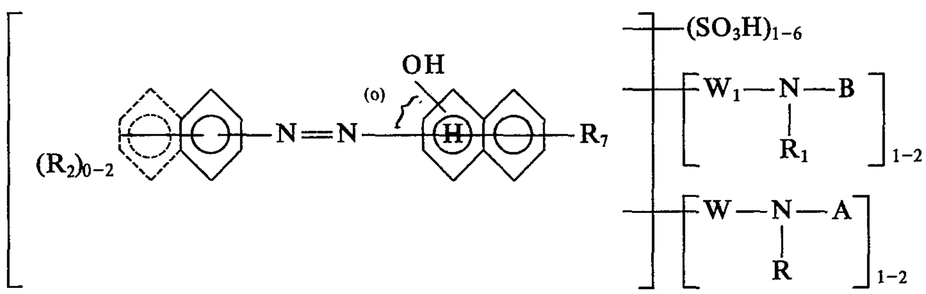

dans laquelle

$R_7$ = hydrogène, $-NR_3-CO-R_8$, $-NR_3-SO_2-R_8$
$R_8$ = groupe alkyle, aryle, hétéro-aryle et aralkyle
o = position en ortho des restes correspondants

et R, $R_1$, W, $W_1$, A, B et $R_2$ ont la définition indiquée cidessus,

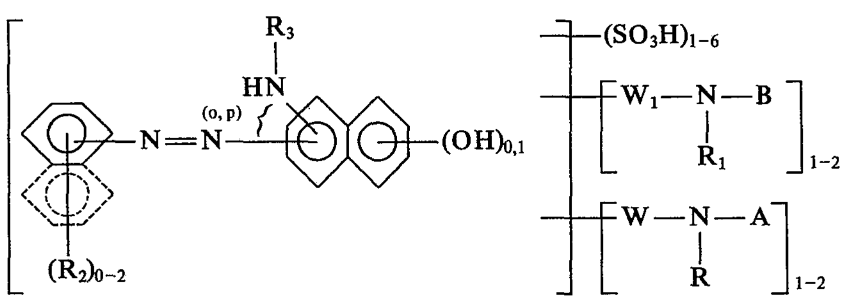

dans laquelle

(o, p) = position en ortho ou para des restes correspondants

et R, $R_1$, W, $W_1$, A, B, $R_2$ et $R_3$ ont la définition indiquée ci-dessus,

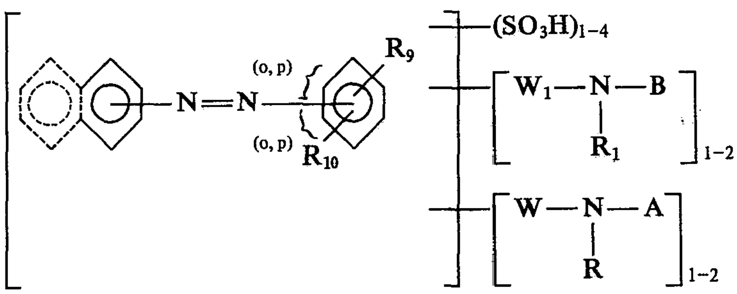

dans laquelle

$R_9$ et $R_{10}$ = hydrogène, $R_8$, $-OR_3$, halogène, $-NR_3R_4$, $-COOR_3$, $-NR_3-COR_4$, $-NR_3-COR_4$, $-O-COR_4$, $-NR_3-SO_2R_4$, $-O-SOR_2R_4$, $-NR_3-CO-NR_3R_4$

et W, $W_1$, R, $R_1$, A, B, $R_3$, $R_4$ et $R_8$ ont la définition indiquée ci-dessus,

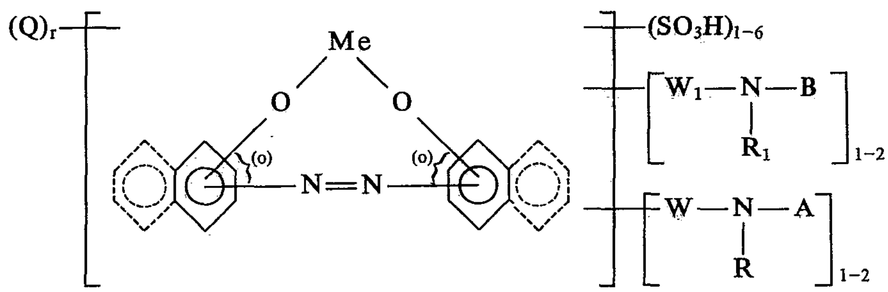

dans laquelle

Me = Cu, Cr
Q = groupe alkyle, alkoxy, halogène, groupe $-NO_2$, acylamino tel que $CH_3-CO-NR_3-$, $-COOR_3$, $-CONR_3R_4$, $-SO_2-NR_3R_4$
r = 0–4

et R, $R_1$, $R_3$, $R_4$, W, $W_1$, A et B ont la définition indiquée ci-dessus,

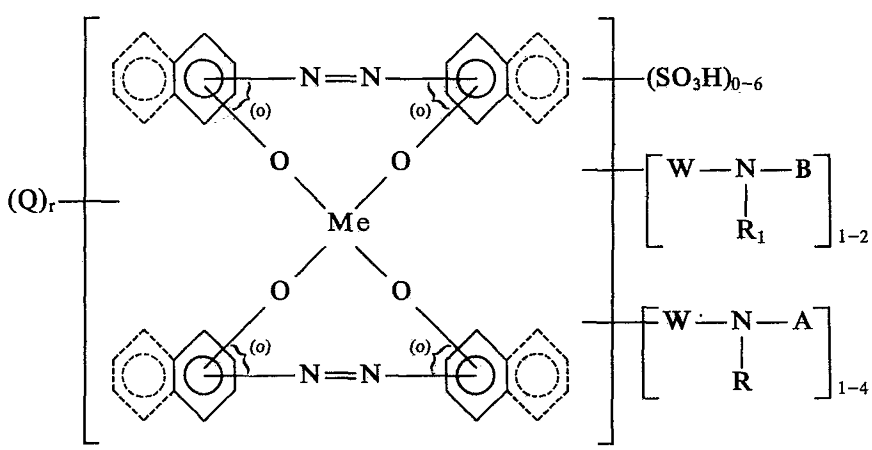

dans laquelle

Me = Co, Cr
r = 0–8
o = position en ortho des restes correspondants

et R, $R_1$, W, $W_1$, A, B et Q ont la définition indiquée ci-dessus,

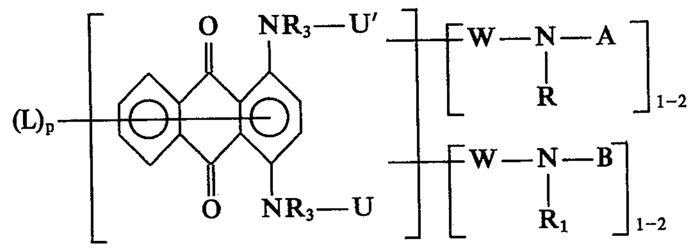

dans laquelle

L = substituant tel que sulfo ou carboxy,
p = 0–4,
U = reste aliphatique, cycloaliphatique, araliphatique ou aromatique éventuellement interrompu par O ou S,
U' = hydrogène ou U

et W, $W_1$, R, $R_1$, A, B et $R_3$ ont la définition indiquée ci-dessus,

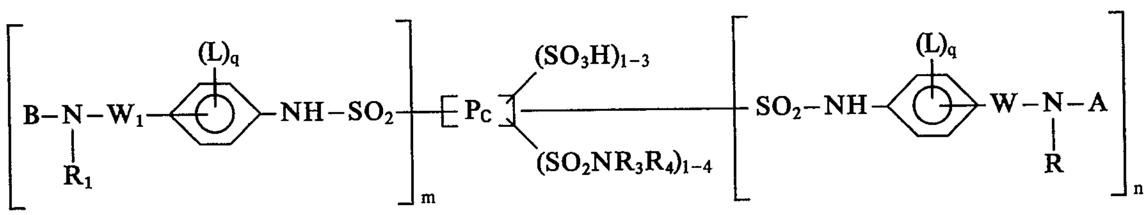

dans laquelle

Pc = désigne un reste de phtalocyanine
L = substituant, notamment sulfo ou carboxy
q = 0–4

et R, $R_1$, $R_3$, $R_4$, W, $W_1$, A, B, m et n ont la définition indiquée ci-dessus,

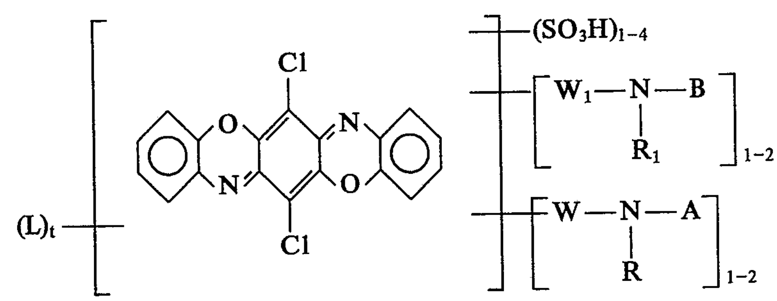

dans laquelle

L = substituant, notamment halogène, groupe alkyle en $C_1$ à $C_4$, alkoxy en $C_1$ à $C_4$ ou carboxy,
t = 0 à 3

et W, $W_1$, R, $R_1$, A et B ont la définition indiquée ci-dessus,

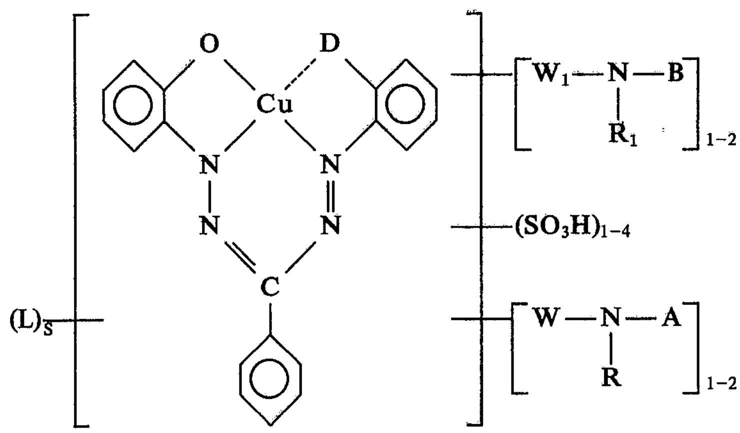

dans laquelle

L = substituant, notamment halogène, groupe alkyle en $C_1$ à $C_4$, alkoxy en $C_1$ à $C_4$, alkylsulfonyle, aminosulfonyle, restes phényle non condensés ou groupe carboxy
S = 0–6
D = groupe apte à la complexation, groupe —OH, —COOH ou —$SO_3H$,

et W, $W_1$, R, $R_1$, A et B ont la définition indiquée ci-dessus.

3. Colorants de formule

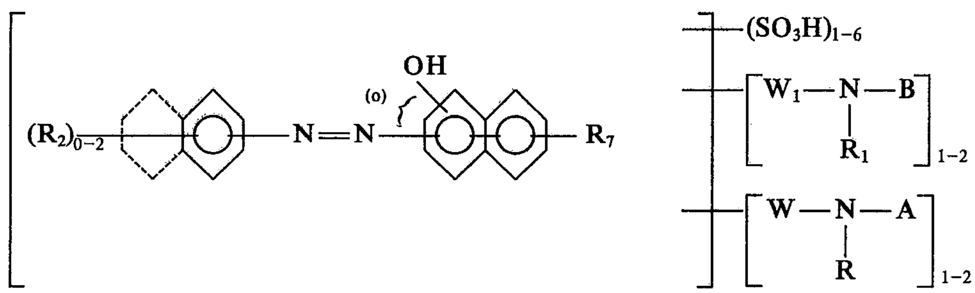

dans laquelle

R = hydrogène ou groupe alkyle
$R_1$ = hydrogène ou groupe alkyle
W et $W_1$ = liaison directe ou pont
$R_2$ = groupe alkyle, groupe alkoxy, halogène
$R_7$ = hydrogène, groupe $—NR_3—COR_8$ ou $—NR_3—SO_2—R_8$
$R_3$ = hydrogène, groupe alkyle, aryle, hétéro-aryle ou aralkyle et
$R_8$ = groupe alkyle, aryle, hétéro-aryle ou aralkyle

A =

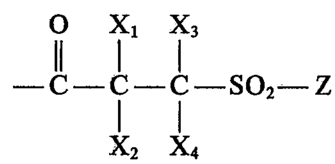

où $X_1—X_4$ et Z ont la définition indiquée dans la revendication 1, et

B =

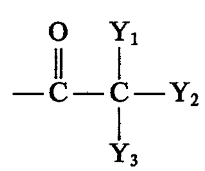

où $Y_1—Y_3$ possèdent la définition indiquée dans la revendication 1.

4. Colorants suivant les revendications 1–3, dans lesquels

A = 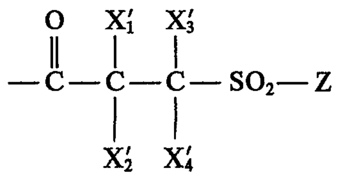

où

$X'_1-X'_4$ = hydrogène ou halogène, l'un au moins des restes $X'_1-X'_4$ représentant un halogène et

B = 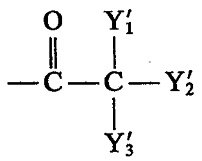

où

$Y'_1-Y'_3$ = hydrogène, chlore ou brome, l'un au moins des restes $Y'_1-Y'_3$ représentant du chlore ou du brome,

Z ayant la définition indiquée dans la revendication 1.

5. Colorants suivant les revendications 1—3, dans lesquels

A = 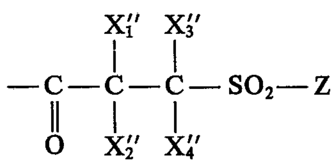

où

$X''_1$ ou $X''_3$ = représente un halogène et l'autre représente l'hydrogène,
$X''_2$ et $X_4$ = représentent l'hydrogène, et

B = 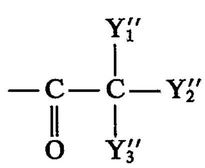

où

$Y''_1$ = hydrogène
$Y''_2-Y''_3$ = chlore ou brome

Z ayant la définition indiquée dans la revendication 1.

6. Colorants suivant les revendications 1 à 3, dans lesquels

A = 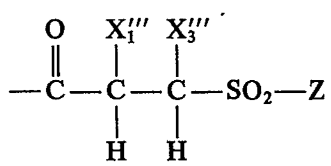

où

$X'''_1$ = Cl ou Br
$X'''_3$ = hydrogène et

B = 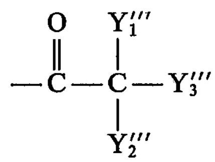

où

$Y_1'''$ = chlore ou brome
$Y_2'''-Y_3'''$ = hydrogène

et Z a la définition indiquée dans la revendication 1.

7. Utilisation des colorants suivant les revendications 1 à 6 pour la teinture et l'impression de matières contenant des groupes hydroxyle et contenant de l'azote.